# EUROPEAN PATENT APPLICATION

(11) **EP 4 579 268 A1**
(43) Date of publication of application: **02.07.2025**
(21) Application number: 24222881.5
(22) Date of filing: 23.12.2024
(51) Int. Cl.: G01S 7/295, G01S 7/41, G01S 13/42, G01S 13/50, G01S 13/58, G01S 17/66, G01S 13/72, G01S 17/88, G01S 13/52, G01S 7/48

(54) **AUTOMATIC TARGET DETECTING AND/OR TRACKING AND/OR IDENTIFICATION**

(30) Priority: 25.12.2023 IL 30970423
(71) Applicant: Elta Systems Ltd., Ashdod 7710201 (IL)
(72) Inventor: COHEN, Eyal, 7179902 Modi'in Makabim-Re'ut (IL); SEIFERT, Sagi, 7051414 Gedera (IL); STEINMETZ, Josef, 5442303 Givat Shmuel (IL)
(74) Representative: Weickmann & Weickmann PartmbB

(57) **Abstract**

There are provided systems and methods comprising obtaining at least one set of data points informative of one or more targets detected by at least one detection system, wherein each given data point of the at least one set of data points is informative of a target of said one or more targets and is associated with data informative of at least one of a position or a velocity of the target, and processing the at least one set of data points to identify at least one subset of data points of the set of data points, arranged in compliance with a given pattern informative of a certain type of target.

## Description

### TECHNOLOGICAL FIELD AND BACKGROUND

The invention is in the field of detecting and/or tracking and/or identifying targets. References considered to be relevant as background to the presently disclosed subject matter are listed below (acknowledgement of the references herein is not to be inferred as meaning that these are in any way relevant to the patentability of the presently disclosed subject matter):
- US5210798;
- CN113341391;
- EP3709049;
- CN105929390;
- https://www.mdpi.com/2072-4292/13/4/662; and
- CN102419437.

There is a need to provide new systems and methods in the field of detecting and/or tracking and/or identifying targets.

### GENERAL DESCRIPTION

In accordance with certain aspects of the presently disclosed subject matter, there is provided a system comprising one or more processing circuitries configured to obtain at least one set of data points informative of one or more targets detected by at least one detection system, wherein each given data point of the at least one set of data points is informative of a target of said one or more targets and is associated with data informative of at least one of a position or a velocity of the target, and process the at least one set of data points to identify at least one subset of data points of the set of data points, arranged in compliance with a given pattern informative of a certain type of target.

In addition to the above features, the system, according to this aspect of the presently disclosed subject matter, can optionally comprise one or more of features (i) to (xxxix) below, in any technically possible combination or permutation:
i. the system is configured to, responsive to identifying the at least one subset of data points, determine that the at least one subset of data points corresponds to a same target;
ii. the system is configured to, responsive to identifying the at least one subset of data points, determine that the at least one subset of data points corresponds to a same target of the certain type;
iii. the system is configured to use the at least one subset of data points to track a target;
iv. the system is configured to, responsive to identifying the at least one subset of data points, operate the detection system in a tracking mode;
v. the set of data points corresponds to a plurality of target detections performed by the detection system during a given period of time, wherein a plurality of target detection attempts has been performed by the detection system in this given period of time and corresponds to an absence of detection of a target by the detection system;
vi. the set of data points correspond to one or more targets detected during a first period of time, wherein the system is configured to obtain and store one or more new data points informative of one or more targets detected by the detection system during a second period of time after the first period of time, wherein one or more target detection attempts has been performed by the detection system in this second period of time and corresponds to an absence of detection of a target by the detection system;
vii. the system is configured to obtain and store at least one first set of data points informative of one or more targets detected by the at least one detection system during a first period of time, wherein each given data point of the at least one first set of data points is informative of a target of the one or more targets and is associated with data informative of at least one of a position or a velocity of the target, process the at least one first set of data points to identify at least one first subset of data points of the at least one first set of data points arranged in compliance with the given pattern informative of the certain type of target, obtain at least one second set of one or more data points informative of one or more targets detected by the at least one detection system during a second period time, wherein each given data point of the at least one second set is informative of a target of the one or more targets and is associated with data informative of at least one of a position or a velocity of the target, and process an aggregated set of data points to identify at least one second subset of data points of the aggregated set of data points arranged in compliance with the given pattern informative of the certain type of target, wherein the aggregated set of points comprises the stored first set of data points and the second set of data points;
viii. one or more target detection attempts have been performed by the detection system in the first period of time and correspond to an absence of detection of a target by the detection system;
ix. one or more target detection attempts have been performed by the detection system in the second period of time and correspond to an absence of detection of a target by the detection system;
x. the system is configured to use the at least one second subset of data points to determine presence of a target, or to track a target, obtain a first set of data points informative of one or more targets detected by the at least one detection system, wherein each given data point of the first set of data points is informative of a target of said one or more targets and is associated with data informative of at least one of a position or a velocity of the target, wherein the first set of data points has been generated using a first detection threshold, use the first set of data points to detect or track a first set of one or more targets, obtain a second set of data points informative of one or more targets detected by the at least one detection system, wherein each given data point of the second set of data points is informative of a target of said one or more targets and is associated with data informative of at least one of a position or a velocity of the target, wherein the second set of data points has been generated using a second detection threshold associated with the detection system which is smaller than the first detection threshold, process the second set of data points to identify a second subset of data points of the at least one second set of data points, arranged in compliance with a given pattern informative of a certain type of target, and use the second subset of data points to detect or track a second set of one or more targets;
xi. the second set of one or more targets comprises one or more targets with a smaller velocity than the first set of one or more targets;
xii. the second set of one or more targets comprises one or more targets with a smaller Radar cross-section than the first set of one or more targets;
xiii. the given pattern is informative of an expected trajectory of said certain type of target;
xiv. the given pattern is informative of an expected velocity profile of said certain type of target;
xv. the system configured to process the at least one set of data points with an Artificial Intelligence algorithm trained to detect the given pattern;
xvi. the given pattern corresponds to a straight line or to a curved line;
xvii. the system is configured to process the at least one set of data points to identify a plurality of subsets of data points of the at least one set of data points, wherein each given subset of data points of the plurality of subsets of data points is arranged in compliance with a given pattern informative of a certain type of target;
xviii. the system is configured to process the at least one set of data points to perform an identification of at least one first subset of data points of the at least one set of data points, arranged in compliance with a first given pattern informative of a first type of target, and process the at least one set of data points to perform an identification of at least one second subset of data points of the at least one set of data points, arranged in compliance with a second given pattern informative of a second type of target different from the first type of target, wherein the second given pattern is different from the first given pattern;
xix. the at least one set of data points is based on a plurality of target detections performed by the at least one detection system within a duration of at least ten seconds;
xx. the second set of one or more data points correspond to one or more target detections performed by the detection system in the second period of time, wherein a plurality of target detection attempts has been performed by the detection system in this second period of time, and corresponds to an absence of detection of a target by the detection system;
xxi. the system is configured to obtain a first track of a target determined based on first data provided by the detection system, obtain a second track of a target determined based on second data provided by the detection system, and determine whether the first track and the second track are arranged in compliance with a given pattern informative of a certain type of target;
xxii. the system is configured to, responsive to determination of a compliance, generate a track including the first track and the second track;
xxiii. the system is configured to obtain at least one set of data points informative of one or more targets detected by the at least one detection system during a period of time T₁, wherein each given data point of the at least one set of data points is informative of a target of the one or more targets and is associated with data informative of at least one of a position or a velocity of the target, store the at least one set of data points in one or more memories, thereby obtaining a current stored set of data points, process the current stored set of data points to identify at least one subset of data points of the current stored set of data points arranged in compliance with the given pattern informative of the certain type of target, for i from 1 to N, perform (1) to (3), wherein N is equal to or greater than 2: (1) obtaining at least one set of data points informative of one or more targets detected by the at least one detection system during a period time Tᵢ ending after the period of time Tᵢ₋₁, wherein each given data point of the at least one set of data points is informative of a target of the one or more targets and is associated with data informative of at least one of a position or a velocity of the target, (2) storing at least part of the set of data points SDPᵢ in one or more memories, thereby updating the current stored set of data points, (3) processing the current stored set of data points to identify a subset of data points in the current stored set of data points arranged in compliance with the given pattern informative of the certain type of target;
xxiv. the at least one subset of data points is selected to include data points associated with a height complying with the certain type of target;
xxv. the subset of data points is selected to include data points associated with a velocity or an acceleration complying with the certain type of target;
xxvi. the pattern is a geometrical pattern;
xxvii. the system is configured to obtain a first given pattern informative of a first type of target, obtain a second given pattern informative of a second type of target, process the at least one set of data points to perform an identification of at least one subset of data points of the at least one set of data points, arranged in compliance with the first given pattern or with the second given pattern, depending on an output of the identification, determine whether a target of the one or more targets detected by the at least one detection system belongs to the first type of target or to the second type of target;
xxviii. the system is configured to obtain a second set of data points which correspond to data points declared as not corresponding to a target, and determine one or more given second data points of the second set, such that the subset of data points and the one or more second data points are arranged together in compliance with the same given pattern associated with the subset of data points;
xxix. the system is configured to determine that the one or more given second data points correspond to a target of the certain type;
xxx. the system is configured to determine that the one or more given second data points and the subset of data points correspond to a same target of this certain type;
xxxi. the system is configured to instruct the detection system to declare the one or more given second data points as targets;
xxxii. the system is configured to use the subset of data points to adapt a detection threshold of the detection system;
xxxiii. the system is configured to use at least part of the set of data points, or at least part of the subset of data points, to adapt operation of the at least one detection system to an area in which it is located;
xxxiv. the at least one detection system comprises one or more radar systems or one or more LIDAR systems;
xxxv. the system is configured to use the at least one subset of data points to generate a command for the at least one detection system; and
xxxvi. the system or the detection system is operative to obtain measurement data comprising range data and Doppler data of a plurality of candidate targets, and a corresponding measured energy, feed the measurement data, or data informative thereof, to a trained machine learning model to determine a probability that each candidate target corresponds to an actual target;
xxxvii. the system is configured to determine whether one or more data points of the set of data points and/or of the subset of data points are associated with a position located above one or more predefined Earth features, and to detect or track a target based on said determination;
xxxviii. the system is configured to determine a direction of a trajectory associated with the subset of data points, and to detect or track a target based on said determination; and
xxxix. the system is configured to use the set of data points and/or the subset of data points, and wind measurements to detect or track a target.

In accordance with other aspects of the presently disclosed subject matter, there is provided a method comprising, by one or more processing circuitries, obtaining at least one set of data points informative of detected by at least one detection system, wherein each given data point of the at least one set of data points is informative of a target of said one or more targets and is associated with data informative of at least one of a position or a velocity of the target, and processing the at least one set of data points to identify at least one subset of data points of the set of data points, arranged in compliance with a given pattern informative of a certain type of target.

The method can comprise one or more of the features (i) to (xxxix) described above with respect to the system.

In accordance with other aspects of the presently disclosed subject matter, there is provided a non-transitory computer readable medium comprising instructions that, when executed by one or more processing circuitries, cause the one or more processing circuitries to perform: obtaining at least one set of data points informative of detected by at least one detection system, wherein each given data point of the at least one set of data points is informative of a target of said one or more targets and is associated with data informative of at least one of a position or a velocity of the target, and processing the at least one set of data points to identify at least one subset of data points of the set of data points, arranged in compliance with a given pattern informative of a certain type of target.

The instructions can comprise one or more of the features (i) to (xxxix) described above with respect to the system.

In accordance with other aspects of the presently disclosed subject matter, there is provided a non-transitory computer readable medium comprising instructions that, when executed by one or more processing circuitries, cause the one or more processing circuitries to perform: obtaining a first set of data points informative of one or more targets detected by the at least one detection system, wherein each given data point of the first set of data points is informative of a target of said one or more targets and is associated with data informative of at least one of a position or a velocity of the target, wherein the first set of data points has been generated using a first detection threshold, using the first set of data points to detect or track a first set of one or more targets, obtaining a second set of data points informative of one or more targets detected by the at least one detection system, wherein each given data point of the second set of data points is informative of a target of said one or more targets and is associated with data informative of at least one of a position or a velocity of the target, wherein the second set of data points has been generated using a second detection threshold associated with the detection system which is smaller than the first detection threshold, processing the second set of data points to identify a second subset of data points of the at least one second set of data points, arranged in compliance with a given pattern informative of a certain type of target, and using the second subset of data points to detect or track a second set of one or more targets.

The instructions can comprise one or more of the features (i) to (xxxix) described above with respect to the system.

In accordance with other aspects of the presently disclosed subject matter, there is provided a non-transitory computer readable medium comprising instructions that, when executed by one or more processing circuitries, cause the one or more processing circuitries to perform: obtaining measurement data comprising range data and Doppler data of a plurality of candidate targets, and a corresponding measured energy, feeding the measurement data, or data informative thereof, to a trained machine learning model to determine a probability that each candidate target corresponds to an actual target.

The instructions can comprise one or more of the features (i) to (xxxix) described above with respect to the system.

According to some embodiments, the proposed solution improves tracking of targets.

According to some embodiments, the proposed solution improves detection and/or tracking of targets with a low velocity.

According to some embodiments, the proposed solution improves detection and/or tracking of targets with small dimensions.

According to some embodiments, the proposed solution is operative to store in a memory detection data provided by a detection system (such as a radar system) over a long period of time, thereby improving detection and/or tracking of targets.

According to some embodiments, the proposed solution is configured to analyze detection data provided by a detection system (such as a radar system) over a long period of time, thereby improving detection and/or tracking of targets.

According to some embodiments, the proposed solution provides a tracking system configured to analyze detection data provided by a detection system (such as a radar system) over a long period of time, without substantially increasing the time response of the tracking system.

According to some embodiments, the proposed solution takes into account the changes in air defense threats.

According to some embodiments, the proposed solution can cope with missing detections of the targets, which is unfeasible with standard models, such as Kalman filters. The missing detections can be due to various factors, such as (but not limited) low velocity, clutter, small RCS (Radar Cross Section).

According to some embodiments, the proposed solution is more robust.

According to some embodiments, the proposed solution enables classification of targets.

According to some embodiments, the proposed solution enables learning from the detection data provided by a detection system over time, in order to improve detection and/or identification of targets.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
- **Fig. 1** illustrates an architecture of a system according to some examples of the invention;
- **Fig. 2** illustrates a method of determining in detection data provided by a detection system, at least one given pattern informative of a target of a certain type, according to some examples of the presently disclosed subject matter;
- **Fig. 3** illustrates non-limitative examples of coordinates of a target;
- **Fig. 4** illustrates a non-limitative example of position data of each of one or more targets detected by a detection system during a given period of time;
- **Fig. 5** illustrates a non-limitative example of a trajectory pattern informative of a civil aircraft;
- **Fig. 6** illustrates a non-limitative example of the usage of the method of **Fig. 2** on the position data of **Fig. 4****;**
- **Fig. 7A** illustrates a method of determining in detection data provided by a detection system, at least one given pattern informative of a target of a certain type, according to some examples of the presently disclosed subject matter;
- **Fig. 7B** illustrates an example of the usage of the method of **Fig. 7A** for declaring presence of a target, in which a plurality of target detection attempts has been classified by the detection system as corresponding to an absence of target;
- **Fig. 7C** illustrates an example of the usage of the method of **Fig. 7A** for tracking a target, in which a plurality of target detection attempts has been classified by the detection system as corresponding to an absence of target;
- **Fig. 8** illustrates a method in which operations of the method of **Fig. 2** and/or of **Fig. 7A** are repeated over time, according to some examples of the presently disclosed subject matter;
- **Fig. 9A** and **Fig. 9B** illustrate non-limitative examples of the usage of the method of **Fig. 8****;**
- **Fig. 9C** illustrates a method in which operations of the method of **Fig. 2** and/or of **Fig. 7A** are repeated over time, according to some examples of the presently disclosed subject matter;
- **Fig. 10** illustrates a non-limitative example of a velocity pattern of a target of a certain type;
- **Fig. 11** illustrates a method of training an algorithm to detect a given pattern in detection data provided by a detection system, according to some examples of the presently disclosed subject matter;
- **Fig. 12** illustrates a method of tracking one or more targets, according to some examples of the presently disclosed subject matter;
- **Fig. 13** illustrates a method of tracking a target, according to some examples of the presently disclosed subject matter;

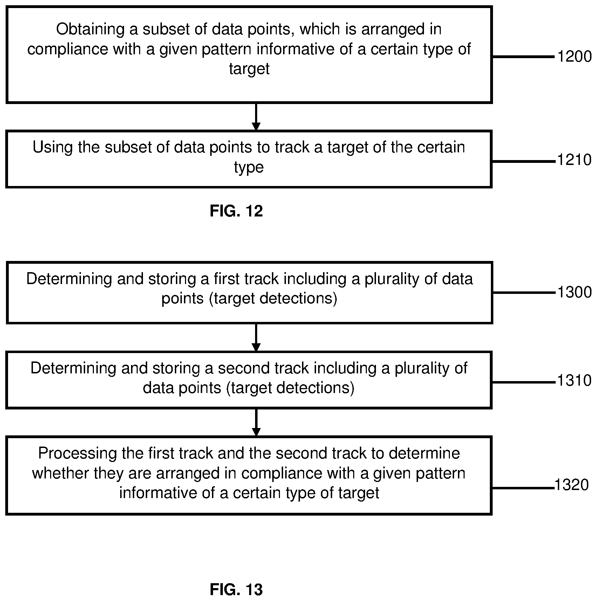

- **Fig. 13** illustrates a method of fusing different tracks, according to some examples of the presently disclosed subject matter;

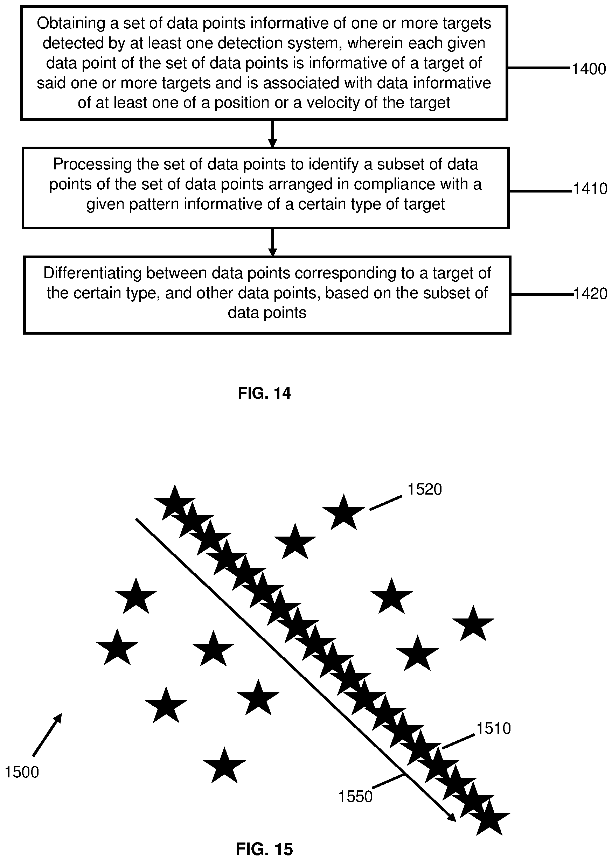

- **Fig. 14** illustrates a method of detecting or tracking a target, based on detection data provided by a detection system with a low detection threshold, according to some examples of the presently disclosed subject matter;
- **Fig. 15** illustrates a non-limitative example of the usage of the method of **Fig. 14****;**

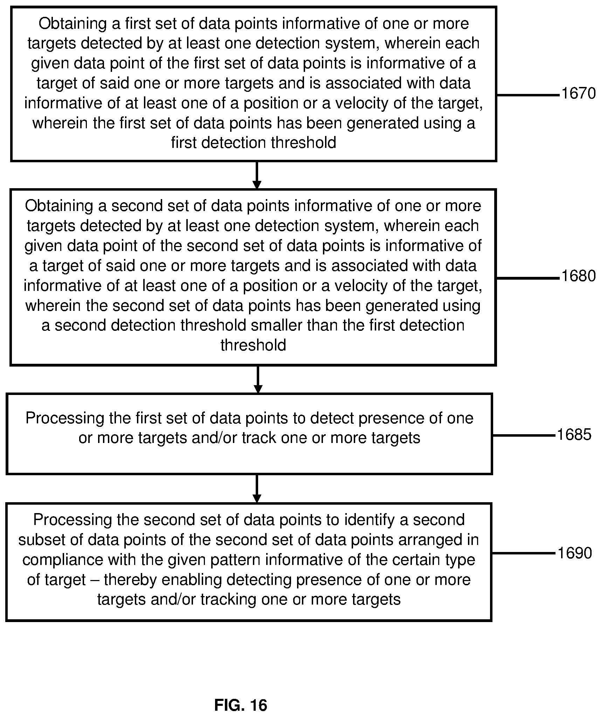

- **Fig. 16** illustrates a method of detecting or tracking targets, in which two different detection thresholds are used, according to some examples of the presently disclosed subject matter;

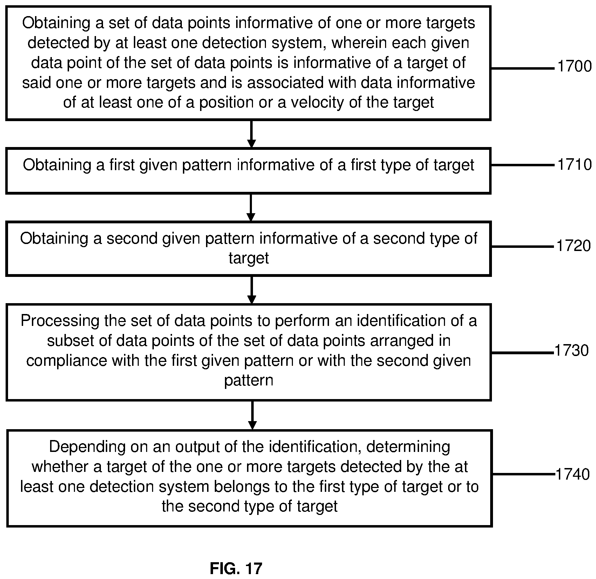

- **Fig. 17** illustrates a method of classifying targets, according to some examples of the presently disclosed subject matter;

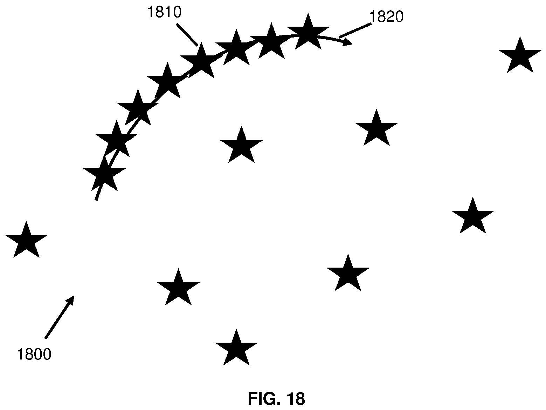

- **Fig. 18** illustrates a non-limitative example of the usage of the method of **Fig. 17****;**

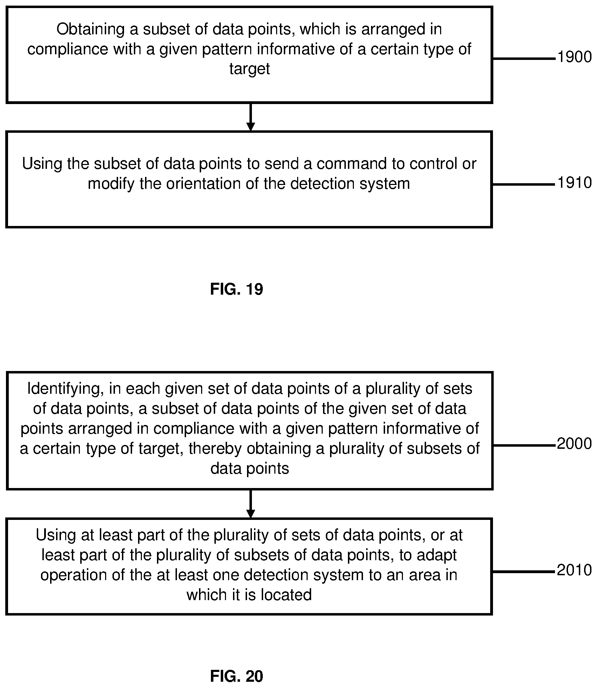

- **Fig. 19** illustrates a method of controlling the detection system, according to some examples of the presently disclosed subject matter;
- **Fig. 20** illustrates another method of controlling the detection system, according to some examples of the presently disclosed subject matter;

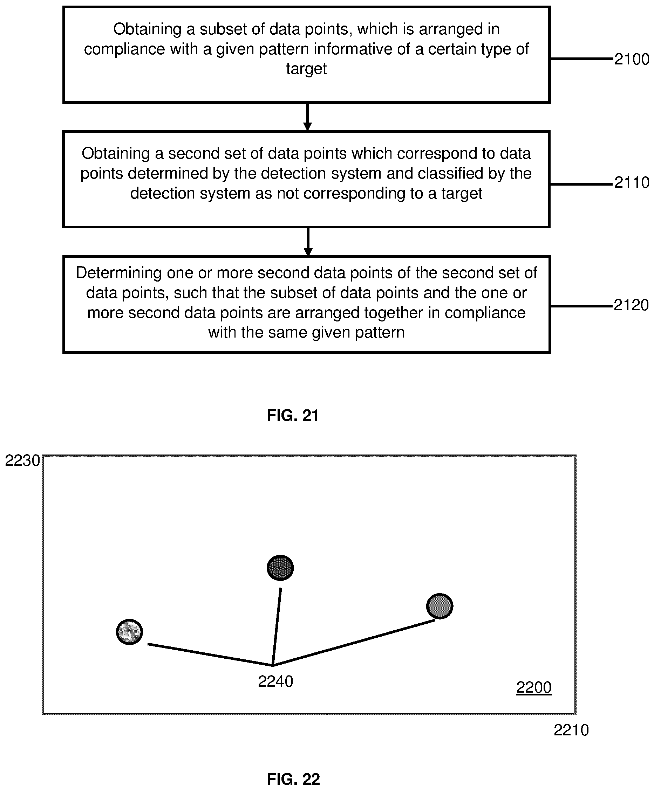

- **Fig. 21** another method of detecting or tracking a target, according to some examples of the presently disclosed subject matter;
- **Fig. 22** illustrates measurement data informative of candidate targets provided by the detection system; and

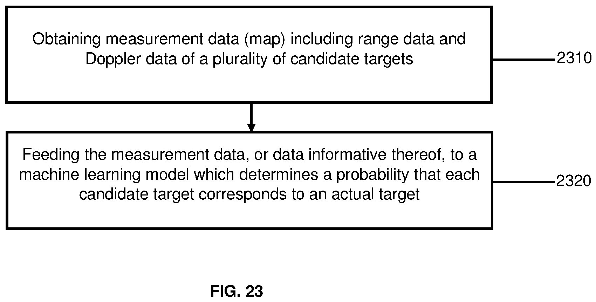

- **Fig. 23** illustrates a method of filtering the measurement data provided by the detection system, according to some examples of the presently disclosed subject matter.

### DETAILED DESCRIPTION OF EMBODIMENTS

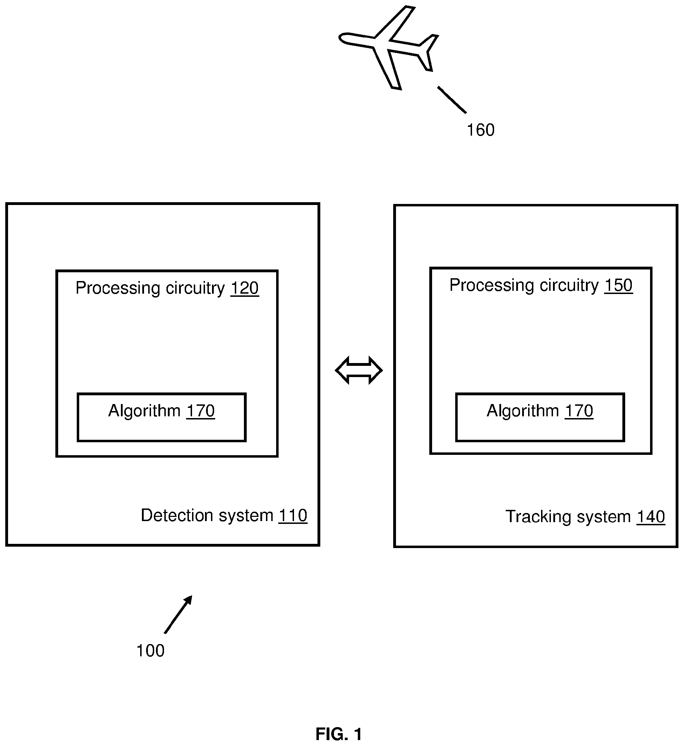

Attention is now drawn to **Fig. 1****,** which depicts a system **100.** In particular, system **100** of **Fig. 1** (or at least part of it) can be used to track and/or identify and/or detect targets.

Elements of the system **100** depicted in **Fig. 1** can be made up of any combination of software and hardware and/or firmware. Elements of the system **100** depicted in **Fig. 1** may be centralized in one location or dispersed over more than one location. In other examples of the presently disclosed subject matter, the system **100** of **Fig. 1** may comprise fewer, more, and/or different elements than those shown in **Fig. 1****.** Likewise, the specific division of the functionality of the disclosed system to specific parts, as described below, is provided by way of example, and other various alternatives are also construed within the scope of the presently disclosed subject matter.

System **100** includes at least one detection system **110,** enabling detecting one or more targets. Note that the various methods described hereinafter can be implemented with a single detection system **110,** or with a plurality of detection systems **110** (which can operate independently, or in cooperation, in order to detect targets). Note that it is possible to use a plurality of different detection systems **110** to detect targets (such as one or more radar systems cooperating with one or more LIDAR systems). The detection system **110** includes at least one (or more) processing circuitry **120,** operative to process data collected by the detection system **110,** or is operatively coupled with at least one (or more) processing circuitry **120.** The processing circuitry **120** can include one or more processors and one or more memories (non-transitory memories).

According to some examples, the detection system **110** is operative to detect targets using electromagnetic waves, such as by using radio detection, and/or laser detection.

Depending on the type of detection system **100,** the detection system **100** can include additional components (these components are not depicted since they depend on the type of detection system **100** which is used).

Assume for example that the detection system **110** includes at least one (or more) radar system(s). The radar system can include a transmitter producing electromagnetic waves, a transmitting antenna (configured to transmit the electromagnetic waves), a receiving antenna (configured to receive the reflected electromagnetic waves), a receiver, and a processing circuitry (which includes one or more processors and one or more (non-transitory) memories, such as the processing circuitry **120).** Note that the radar system can include other components which are not described since they are known in the art. According to some examples, the detection system **110** includes a plurality of radar systems.

According to some examples, the detection system **110** includes a LIDAR (light detection and ranging) system, or a plurality of LIDAR systems. In this example, the LIDAR therefore includes components such as a laser, a photodetector, and other known components of a LIDAR.

According to some examples, the detection system **110** includes at least one camera.

According to some examples, the detection system **110** includes an Electronic Signal Intelligence (ELINT) system.

According to some examples, the detection system **110** includes a Communication intelligence (COMINT) system.

The detection system **120** is operative to provide detection data informative of one or more targets **160** detected by the detection system **120.** The detection data can include, for example, data informative of a position of the targets **160,** data informative of a velocity (such as radial velocity, also called Doppler velocity) of the targets **160,** time at which the targets **160** have been detected by the detection system **120,** or other data informative of the one or more targets **160.**

According to some examples, the targets can include an aerial vehicle (such as an aircraft, a helicopter, a UAV (unmanned aerial vehicle), a balloon, etc.). In some examples, the targets can include a ground vehicle (such as a car, an autonomous vehicle, etc.) and/or a marine vehicle (e.g., a ship, an unmanned surface vehicle (USV), etc.).

Note that it can occur that the detection system **120** detects targets which do not correspond to targets for which the detection system **120** is used. This can be due to various factors, such as the presence of noise, the sensitivity of the detection system **120** (which can be tuned e.g., by an operator), etc. For example, assume that the detection system **120** is used to detect civil aircraft, and detects a bird as a target. In this example, the bird has been detected as a target, although the detection system **120** is used to detect civil aircraft.

In some examples, system **100** can further include a tracking system **140.** The tracking system **140** can include one or more processing circuitries **150,** or is operatively coupled with one or more processing circuitries **150.** Each processing circuitry **150** includes one or more processors and one or more memories (non-transitory memories).

Note that the detection system **110** and the tracking system **140** can be operatively coupled, in order e.g., to exchange data. In some examples, the tracking system **140** can send commands to the detection system **110,** in order to control its operation. In some examples, the tracking system **140** can be part of the detection system **110.**

The tracking system **140** can be used to perform various tasks based on detection data provided by the detection system **110,** such as tracking of targets, determination of whether targets detected by the detection system **110** correspond to actual targets, identification of certain types of targets, classification of targets, etc. This list is not limitative.

The processing circuitry **150** of the tracking system **140** and/or the processing circuitry **120** of the detection system **110** can implement an algorithm **170** configured to receive a set of data points (generated based on the detection data of the detection system **110)** and to identify, in the set of data points, a subset of data points arranged in compliance with a given pattern informative of a certain type of target. This will be discussed hereinafter. Note that the algorithm **170** can be executed by one or more different processors of the processing circuitry **150,** or by the same single processor of the processing circuitry **150.**

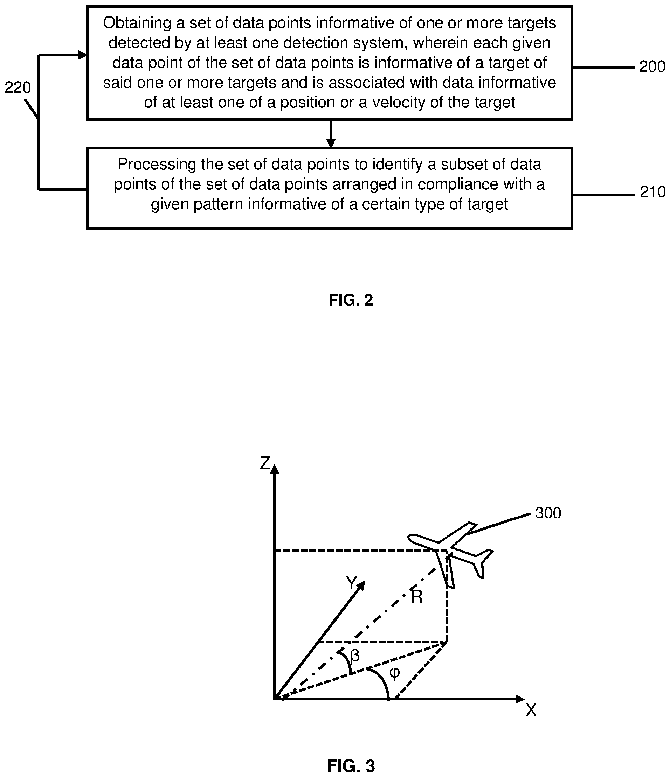

According to some examples, the processing circuitry **150** is operative to execute one or more of the methods described with reference to **Figs. 2****,** **7A****,** **8****,** **9C****,** **11****,** **12****,** **13****,** **14****,** **15****,** **16****,** **17****,** **19****,** **20****,** **21** and **23****,** according to some examples of the presently disclosed subject matter.

According to some examples, a processing circuitry different from the processing circuitry **150,** or which cooperates with the processing circuitry **150,** can be used to execute one or more of the methods described with reference to **Figs. 2****,** **7A****,** **8****,** **9C****,** **11****,** **12****,** **13****,** **14****,** **15****,** **16****,** **17****,** **19****,** **20****,** **21** and **23****,** according to some examples of the presently disclosed subject matter.

The various operations described with reference to these methods can be performed by different processors (or processor combinations) of the processing circuitry **150,** while optionally, at least some of these operations may be performed by the same processor. More generally, the present disclosure should not be limited to be construed as one single processor always performing all the operations.

When a detection system **110** such as a radar system attempts to detect targets, it transmits electromagnetic waves towards a given direction, and senses the returned electromagnetic waves. If the energy of the returned electromagnetic waves is equal to or above a detection threshold of the radar system, the radar system declares a target. If the energy of the returned electromagnetic waves is below the detection threshold of the radar system, the radar system does not declare a target (it considers it as an absence of target detection - this is called a "miss"). The radar system may miss a target for other reasons, such as the low velocity of the target, the clutter, the small RCS of the target, or other factor(s).

A similar principle applies to other types of detection systems (such as LIDAR system, etc.).

A conventional radar system generally operates in two modes (this two-modes operation can be present also in other types of detection systems). In a first mode, it scans the outer space in order to attempt to detect the presence of a target. When a sufficient number of consecutive target detections has been obtained, the radar system declares the presence of a target. In some solutions, if the radar system performs a single target detection and then generates one or a few miss detections, it will not declare the presence of a target. The target detection will not be stored in a memory. The radar system will wait for new target detections in order to declare the presence of a target.

Once the presence of a target has been declared, the radar system can switch to a second mode, corresponding to a tracking mode. In the tracking mode, the radar system focuses its beam towards specific areas of space, in which it is expected that the declared target will be present. The radar system attempts to build a track composed of several target detections collected over time.

In a tracker which relies on the use of Kalman filter(s), each time the radar system performs a new target detection (time N), it attempts to match this new target detection with the last target detection (time N-1) only. If there is a match, the system stores in memory only the new target detection (time N) as the last point (the previous target detections performed before time N are not kept in memory). Then, when a new target detection (time N+1) is performed, it attempts to match this new target detection (time N+1) with the last target detection (time N) only.

If there is a mismatch (or a few mismatch), the radar system deletes the track. It then reverts to the first mode as explained above.

Similarly, if at time N+1 there is a miss (or a few miss detections), the radar system can conclude that the target has been lost and deletes the track. It then reverts to the first mode as explained above.

New methods and systems, which provide various technical benefits, are provided hereinafter. They can be used both to declare the presence of a target and to track the target (and/or for other applications). Various other applications are described hereinafter.

Attention is now drawn to **Fig. 2****,** which depicts a method which can be used to determine data informative of one or more targets, based on the detection data (or data derived thereof) output by the detection system **110.** As mentioned above, each time the detection system **110** performs detection of a target, it can provide various data associated with this detection, such as the position and/or the velocity of the target at the time this target has been detected, the given instant of time at which this detection has been performed, etc. The detection system **100** can perform, within a given period of time, various detections of one or more targets.

It is possible to identify, in the detection data collected over a given period of time, one or more specific patterns which are characteristic of a certain type of target. This can be used for various applications, such as identification of targets, tracking of targets, classification of targets, determining of kinematical data (position, velocity, acceleration) of targets, etc.

Note that a certain type of target can be characterized by one or more patterns, and that different types of targets can be associated with different patterns.

For example, some targets (such as civil aircraft) tend to have a trajectory which corresponds substantially to a straight line (e.g., in a X/Y plane, which is a plane parallel to the surface of the Earth), at least during a certain period of time. This example is not limitative, and different patterns can be identified in the detection data.

In another example, some targets have a trajectory with a pattern which is circular, or elliptic, or corresponds to a square. This kind of pattern is also called a hold pattern and enables an aerial vehicle to be maintained substantially over the same scene during a given period of time.

Note that although examples pertaining to aerial vehicles are provided, the same applies to ground and/or maritime vehicles, which can be associated with specific pattern(s), such as specific trajectory pattern(s).

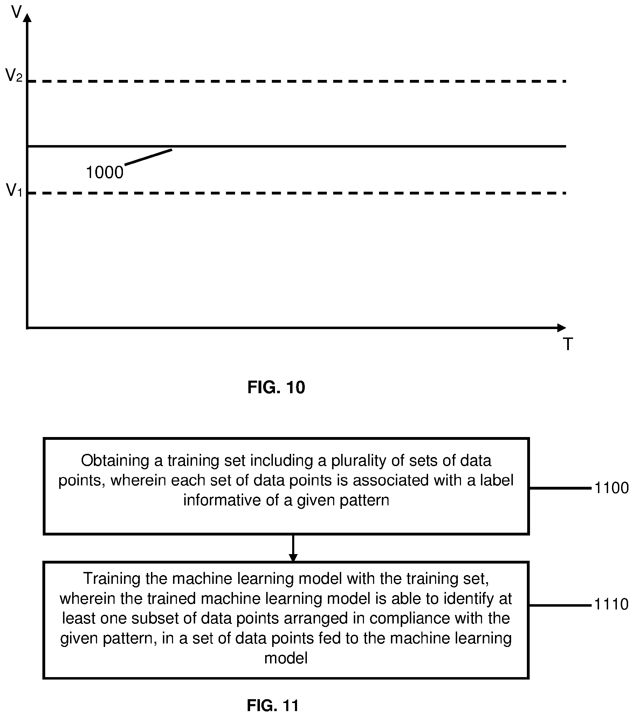

More generally, the pattern can be informative of kinematic data of a certain type of target, such as a specific trajectory pattern (as mentioned above), a specific velocity pattern, a specific acceleration pattern, etc. Note that a non-limitative example of a specific velocity pattern is provided hereinafter with reference to **Fig. 10****.**

The pattern(s) can be provided by one or more technical experts (who have knowledge of the typical position pattern and/or velocity pattern and/or acceleration pattern of a certain type of target), and/or by analyzing historical data (including position and/or velocity and/or acceleration) of a certain type of target and determining typical pattern(s) of this certain type of target, and/or by performing a simulation of the position and/or the velocity and/or the acceleration of a certain type of target and determining typical pattern(s) of this certain type of target.

The method of **Fig. 2** includes (operation **200)** obtaining a set of data points informative of one or more targets detected by the at least one detection system **110** during a period of time. In some examples, a plurality of detection systems **110** is used, and the set of data points is obtained based on the detection data provided by this plurality of detection systems **110.** This is, however, not limitative.

For example, assume that the period of time is between t₀ and t₁. In this period of time, the detection system **110** has performed a plurality of detections, each detection being informative of a target. For example, in the case of a radar system, the radar system transmits electromagnetic waves and measures the energy of the reflected electromagnetic waves. If the energy is above a detection threshold of the radar system, a target is detected (this corresponds to a detection), and if this is not the case, the radar system does not perform a detection of a target.

As further explained hereinafter, the set of data points (each data point corresponding to a target detection) can be such that there are misses between the data points. In other words, even if a plurality of misses is generated by the detection system over time between time t₁ and time t₂, the data points corresponding to previous target detections (between time t₀ and time t₁) can be stored in a computer memory for further processing.

At this stage, it is not necessarily known whether the different targets detected by the detection system **110** during the period of time correspond to a single target moving over time, or to multiple targets. In addition, the type of each target is not necessarily known. Lastly, it is not necessarily known whether each detected target corresponds to an actual target (for which the detection system **110** is used), or to noise.

Each given data point of the set of data points obtained at operation **200** can be associated with data informative of at least one of a position or a velocity of the target (at the time the target has been detected), and the time of the detection, as provided by the detection system **110.**

The position of the target can include at least two or three components. As depicted in **Fig. 3****,** a radar system generally measures the range R of the target **300,** the azimuth φ of the target **300,** and the elevation β of the target **300.**

Note that a different representation can be used to represent the position of the target **300,** such as a Cartesian representation.

For example, assume that a horizontal plane (parallel to the surface of the Earth) is defined by two axes (X and Y axes), and that a vertical plane is orthogonal to the horizontal plane (the vertical plane includes a Z axis orthogonal to the X and Y axes).

The position associated with each data point of the set of data points, informative of a target, can include at least one of a position of the given target along the X axis (at time T), a position of the given target along the Y axis (at time T) and a position (height) of the given target along the Z axis (at time T).

Each data point can be associated with a time T at which the given target has been detected.

Each data point can be associated also with a velocity V of the given target (e.g., radial velocity at time T).

Note that the position and/or the velocity can be defined with different definitions of the referential (e.g., spherical representation, cylindrical representation, latitude/longitude and height, etc.).

In some examples, the method of **Fig. 2** can include performing a pre-processing of the set of data points provided by the detection system **110.** This pre-processing can include selecting, in the set of data points, values associated with certain variables only. For example, the set of data points provided by the detection system **110** can be converted into a set of data points including only two components of the position (e.g., the values for the X position and the Y position), and, if necessary, this set of data points can also include the time T at which each target has been detected. This enables representing the set of data points according to a two-dimensional representation.

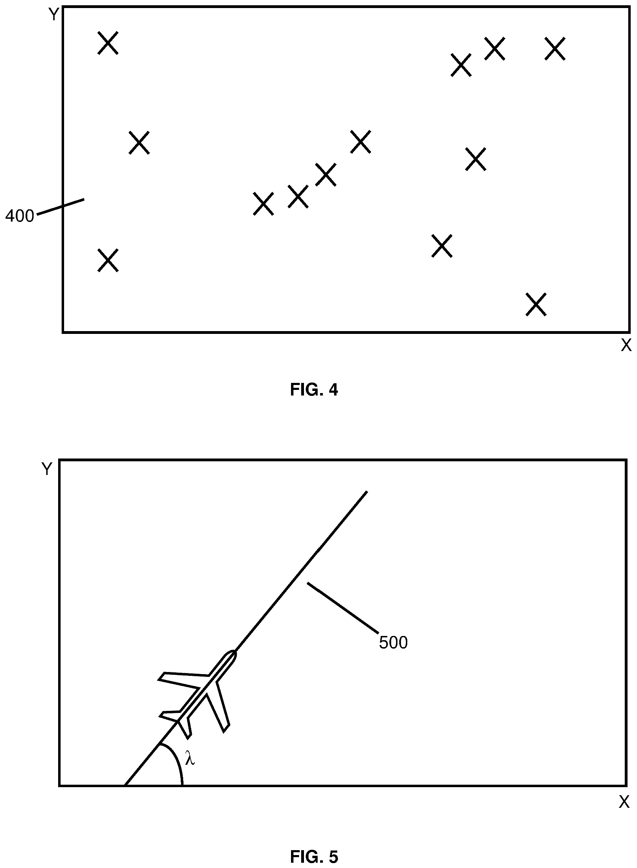

A non-limitative example of a set **400** of data points which can be represented according to a two-dimensional representation is illustrated in **Fig. 4****.** This set **400** of data points includes, for each data point, the values for the X position and the Y position (note that the time T associated with each data point can also be stored, but is not explicitly represented in **Fig. 4****).**

Note that different variables within the set of data points can be selected, in order to identify a pattern (as explained hereinafter). In some examples, each data point of the set of data points can correspond to the radial velocity of the given target with respect to the time of detection T of the given target, the radial velocity at each time of detection T with respect to the height of the given target, etc.

In some examples, the set of data points can be represented as an image, in which each pixel of the image corresponds to a given data point of the set. This is, however, not mandatory.

In some examples, the set of data points can correspond to a three-dimensional representation. For example, each data point is associated with values for the X position, the Y position and the Z position. This enables representing the three-dimensional position of each target, at each time of detection T.

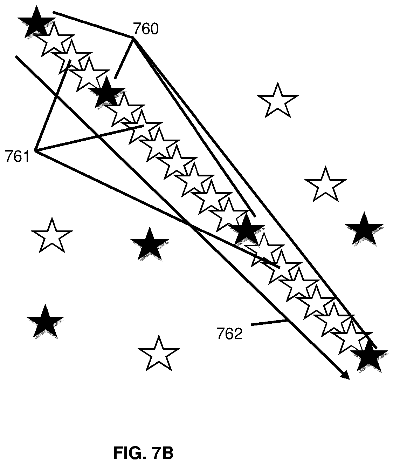

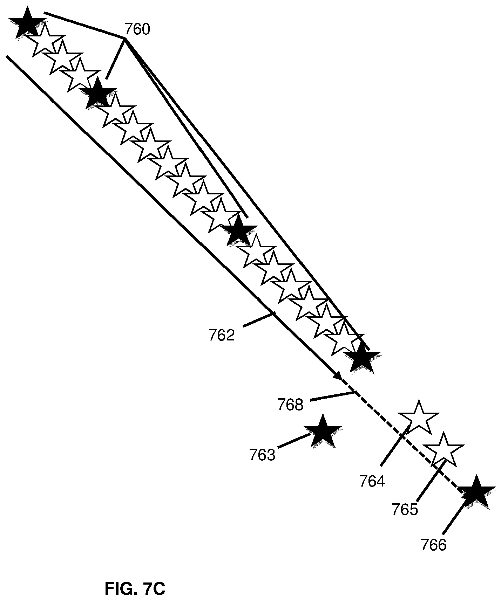

In some examples, the set of data points corresponds to a plurality of target detections performed by the detection system during a given period of time, wherein a plurality of target detection attempts has been performed by the detection system in this given period of time and corresponds to an absence of detection of a target by the detection system (also called miss). Non-limitative examples are provided in **Figs. 7B** and **7C****.** In spite of the presence of these miss detections (between, before, or after the various data points corresponding to target detections), the method keeps in memory the data points corresponding to target detections.

The method of **Fig. 2** further includes (operation **210)** processing the set of data points to identify at least one subset of data points of the set of data points arranged in compliance with a given pattern informative of a certain type of target. In some examples, this processing can involve feeding the set of data points to the algorithm **170** of the tracking system **140,** to identify the given pattern.

As explained hereinafter, the at least one subset of data points can be used for various purposes, such as identifying a target, determining the type of the target, tracking a target of the certain type, determining kinematic data of a target of the certain type, determining which data points correspond to a target of the certain type, etc.

Generally, the subset of data points corresponds to a fraction of the set of data points. In some examples in which all the data points of the set of data points are arranged in compliance with the given pattern, the subset of data points can correspond to the whole set of data points.

The given pattern is a geometrical pattern, which is informative of a certain type of target. In particular, the pattern can be informative of kinematic data of a certain type of target, such as a specific trajectory pattern, a specific velocity pattern, a specific acceleration pattern, etc.

In some examples, the set of data points can be represented using a two-dimensional representation (e.g., on a plane), and therefore the given pattern can be a two-dimensional pattern (e.g., a line, a circle, or any relevant shape characteristic of a position and/or velocity pattern and/or acceleration pattern of a certain type of target).

In some examples, the set of data points can be represented using a three-dimensional representation (e.g. in a referential comprising three orthogonal axis), and therefore the given pattern can be a pattern represented using a three-dimensional representation (e.g. a line with a certain inclination in the 3D referential, a circle with a certain inclination in the 3D referential, or a three-dimensional shape characteristic of a position and/or velocity pattern of a certain type of target).

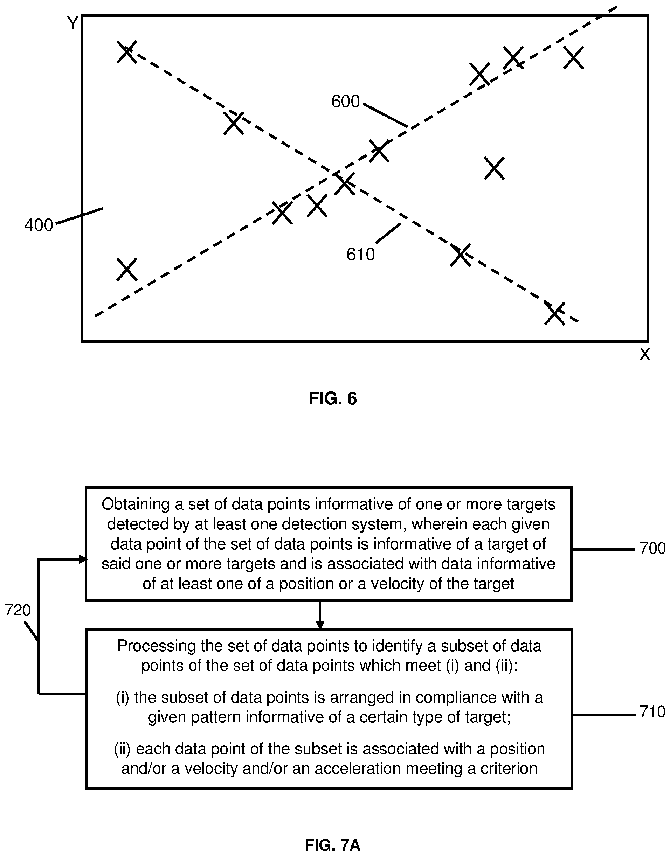

Note that it is possible to identify a plurality of subsets of data points, each arranged in compliance with the given pattern. This enables identifying a plurality of targets of the certain type. For example, a first subset of data points of the set of data points is arranged along the given pattern, and corresponds to a first target of the certain type, and a second subset of data points of the set of data points is arranged along the given pattern, and corresponds to a second target of the certain type. A non-limitative example of this scenario is illustrated in **Fig. 6****,** as explained hereinafter.

In some examples, it is possible to identify a first subset of data points arranged in compliance with a first given pattern informative of a first type of target, and a second subset of data points arranged in compliance with a second given pattern informative of a second type of target, different from the first type. For example, the first given pattern is a straight line (informative of the trajectory of a civil aircraft) and the second given pattern is a circle or an ellipse (informative of the trajectory of a drone performing a hold pattern).

In some examples, it is possible to process the set of data points to identify at least one first subset of data points of the set of data points, arranged in compliance with a given trajectory pattern informative of a certain type of target, and to process the set of data points to identify at least one second subset of data points of the set of data points, arranged in compliance with a given velocity or acceleration pattern informative of the certain type of target. Data points which both belong to the first subset of data points and to the second set of data points can be considered as informative of a target of the certain type (because they comply both with the trajectory pattern and velocity (or acceleration) pattern of the certain type of target).

In other words, the set of data points is processed both in terms of trajectory and velocity (or acceleration), in order to identify relevant subset of data points.

Operation **210** can be illustrated with a non-limitative example. Assume that the set of data points includes, for each data point informative of a given target, the X position and the Y position (position in a horizontal plane) of the given target, as illustrated with respect to the set **400** of data points in **Fig. 4****.**

Assume that it is desired to detect an aircraft, such as a civil aircraft. In general, the motion of a civil aircraft corresponds to a straight line in the X/Y plane over time. Therefore, if it is desired to identify a subset of data points of the set of data points which corresponds to the same given civil aircraft, the given pattern can be selected as a straight line (see for example the straight line **500** in **Fig. 5****),** which is informative of the (typical) motion of a civil aircraft.

In some examples, the inclination λ of the straight line (in the X/Y plane) is not taken into account, and any trajectory complying with a straight line in the X/Y plane is considered as complying with the given pattern.

In other examples, it can be known in advance that the civil aircraft has generally a motion according to a straight line with an inclination λ within a given range with respect e.g., to the X axis. In this case, the given pattern can be selected to correspond to a straight line with an inclination within this given range.

Since the given pattern has been selected as corresponding to a straight line in this example, the set of data points **400** is processed in order to identify one or more subsets of data points, wherein each subset of data points is arranged in compliance with a straight line. **Fig. 6** illustrates an output of this identification in the set of data points **400,** in which two different subsets of data points arranged along in compliance with two different straight lines **600, 610** have been identified. It is expected that these two subsets of data points correspond to the motion of two different civil aircraft. Note that the data points of each respective subset of data points do not need to be perfectly aligned with the respective straight line, and the algorithm **170** attempts to identify the subset(s) of data points which best fits the given pattern. Note that it can occur that a different number of subsets of data points, each arranged in compliance with a straight line, is identified.

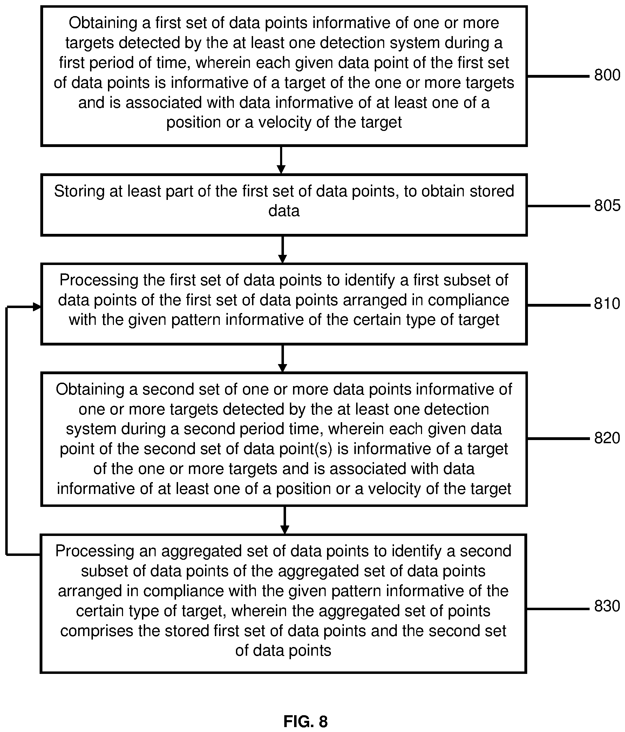

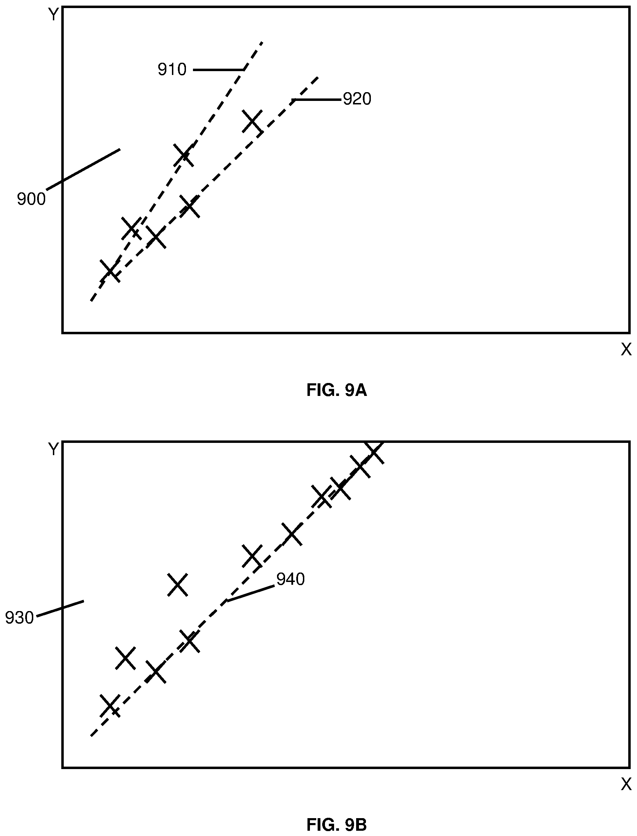

The method of **Fig. 2** is illustrated with an arrow **220,** which indicates that the method can be repeated over time. In particular, each time additional detection data is received from the detection system **110,** this additional detection data can be used in association with detection data received previously, in order to identify the given pattern over a longer period of time. This will be discussed hereinafter with respect to **Figs. 8** and **Figs. 9A** to **9C.** In particular, as explained hereinafter, the method can benefit from the fact that each time new detection data is received, it is stored in association with the detection data received previously, thereby enabling identifying targets with detection data collected over a long period of time.

Attention is now drawn to **Fig. 7A****,** which depicts a method in which identification of the subset of data points relies both on the identification of a given pattern, together with one or more criteria on the position and/or the velocity and/or the acceleration of the target, which characterizes the certain type of target.

The method of **Fig. 7A** includes obtaining (operation **700)** a set of data points informative of one or more targets detected by the at least one detection system **110,** wherein each given data point of the set of data points is informative of a target of these one or more targets, and is associated with data informative of at least one of a position or a velocity of the target. Operation **700** is similar to operation **200** and is not described again.

The method of **Fig. 7A** further includes (operation **710)** processing the set of data points to identify at least one subset of data points of the set of data points, which meets at least two conditions:
- (i) the at least one subset of data points is arranged in compliance with a given pattern informative of a certain type of target (this is similar to operation **210** of **Fig. 2****);** and
- (ii) each data point of the at least one subset of data points is associated with a position (such as height) and/or a velocity and/or an acceleration meeting a criterion. In particular, the position and/or the velocity and/or the acceleration can be selected to be informative of the certain type of target. More generally, the subset of data points can be selected so as to meet a physical criterion, such as a similar Radar cross-section (RCS), which indicates that the same target is present. The method of **Fig. 7A** can be illustrated with a non-limitative example.

Assume for example that it is desired to detect a civil aircraft. The criterion can dictate that each data point of the subset of data points must have a height (Z coordinate) which is within the expected range for the height of a civil aircraft.

In another example, the criterion can dictate that each data point of the subset of data points must have a velocity which is within the expected range for the velocity of a civil aircraft.

In another example, the criterion can dictate that each data point of the subset of data points must have an acceleration which is within the expected range for the acceleration of a civil aircraft.

This helps to further refine the selection of the subset of data points which correspond to a certain type of target. This can help, for example, to differentiate between data points informative of a civil aircraft and data points informative of other targets, such as drones (which can have a different height and/or velocity than a civil aircraft).

In some examples, it is possible to determine whether one or more data points of the set of data points and/or of the subset of data points are located above one or more predefined Earth features (ground features or see features), such as roads, valleys, sea, etc. These Earth features can be obtained from a three-dimensional model of the Earth. This can help understanding whether the subset of data points corresponds to a required aerial target. For example, this can help differentiating between aerial targets (which can fly over part of the Earth which does not necessarily correspond to roads) and a ground vehicle (which generally travels on roads). This is not limitative.

According to some examples, wind measurements are used to detect and/or track target(s). Wind measurements can be provided by sensors such anemometers. Wind measurements can correspond to real time wind measurements (at a time the subset of data points has been obtained). If the subset of data points corresponds to a target with a certain speed (with respect to ground), it is possible to use wind measurements to determine the actual speed of the target (without the wind effect). Indeed, it can occur for example that the wind reduces the speed of the target, or artificially increases the speed of the target. If the actual speed (without the wind effect) matches a certain criterion (e.g., it is within a certain range), a target can be detected and/or tracked, and if this is not the case, a target is not declared or is not tracked.

The methods of **Fig. 2** and/or **Fig. 7A** (and the other methods described herein) can be used for various applications.

In some examples, these methods can be used to declare the presence of a target. This is illustrated with reference to **Fig. 7B****.** A set of data points **760** (black stars) is obtained, in which each data point **760** corresponds to a target detection. Between the data points, the detection system has performed a plurality of target detection attempts, which have led to a determination of an absence of target by the detection system. These target detection attempts are also called miss detections **761** (white stars). **Fig. 7B** illustrates the position of the target detections and the position of the miss detections.

A subset **762** of data points is identified within the set of data points **760,** such that this subset **762** of data points is arranged in compliance with a given pattern informative of a certain type of target (in this non-limitative example, the given pattern has been selected as a straight line).

Other solutions would not be able to declare the presence of the target in the scenario depicted in **Fig. 7B****,** since it includes several misses between the target detection. With the method(s) described herein, in which it is attempted to match the target detections to a given pattern, it is possible to declare the presence of a target. Even if several misses are present between the various target detections, the system can keep in a memory the various target detections and can try to fit a given pattern to the target detections in order to declare the presence of a target. Note that this feature is not limitative and declaration of the presence of a target (by determining the presence of a given pattern) can be performed in various scenarios, without being applicable only to the case in which the various target detections are kept in memory over a certain period of time.

In some examples, the various methods described herein can be used to track a target. This is illustrated with respect to **Fig. 7C****.**

Assume that the presence of a target has been declared, corresponding to a certain subset of data points arranged along a given pattern **762.** It can be intended to track the target.

When a new data point **763** (corresponding to a new target detection) is obtained from the detection system **110,** it can be attempted to determine whether the subset of data points, together with the new data point **763,** matches the given pattern. If there is a match, it can be concluded that the new data point can be assigned to the track (that is to say that all these data points correspond to the same single target). If there is a mismatch, the new data point is not assigned to the track, but can be kept in a computer memory, for further processing.

Over time, additional target detections can be performed. Note that the detection system **110** may also generate one or more miss detections (see misses **764** and **765).** However, in contradiction with other solutions, the method can keep the track in a computer memory (corresponding in this case to the subset of data points **760** located on the pattern **762).** After some miss detections, assume that an additional data point **766** (corresponding to a target detection) has been performed. It is attempted to determine whether the subset of data points, together with the new data point **763,** matches the given pattern.

In the example of **Fig. 7C****,** there is match (see arrow **768).** In spite the presence of miss detections, the method has kept in memory the track of data points **760** and has managed to update the track with the new target detection **766** obtained after several misses (and a target detection **763** out of the track). Therefore, the track is updated to further include the new data point **763.**

In contradiction with other methods, in which few miss detections of the target prevent from declaring the presence of a target, and prevent from pursuing a current track of the target (other methods would generate a new track in the presence of miss detections), the proposed solution can cope with missed detections of the target and is able to detect and pursue the track the target even in the presence of missed detection(s) of the target. This is further facilitated by the fact that the method can store over a certain period of time the data points provided by the detection system, which enables searching for a pattern which matches the data points. Note that this feature is not limitative and tracking of a target (by determining the presence of a given pattern) can be performed in various scenarios, without being applicable only to the case in which the various target detections are kept in memory over a certain period of time.

In some examples, it is possible to use the subset of data points (and/or the track) to predict the direction of the target. If this direction matches a criterion, a target can be detected. For example, if the direction of the aerial target heads towards a city, a target can be detected, whereas if the aerial target heads towards the sea, the target may be ignored. Other criteria can be used.

The various methods described above (both for declaring the presence of a target, and/or for tracking a target) can be repeated iteratively over time, as illustrated in the non-limitative example of **Fig. 8****.**

The method of **Fig. 8** includes obtaining (operation **800)** a first set of data points informative of one or more targets detected by the at least one detection system **110** during a first period of time. Assume for example that the first period of time is between time t₀ and time t₁. Each given data point of the first set of data points is informative of a target of the one or more targets, and is associated with data informative of at least one of a position or a velocity of the target. The data can further include the time of detection of each target. Operation **800** is similar to operations **200** and **700** and is not described again.

Note that it can occur that between the data points of the first set, the detection system may have generated miss detections (as illustrated e.g., in **Figs. 7B** and **7C****)**

The method of **Fig. 8** includes storing (operation **805)** at least part of the first set of data points, to obtain stored data. The first set of data points can be stored in one or more memories (non-transitory memories), such as one or more memories of the processing circuitry **150** of the tracking system **140,** and/or in one or more different memories.

The method of **Fig. 8** further includes processing (operation **810)** at least part of the first set of data points to identify a first subset of data points of the first set of data points, arranged in compliance with a given pattern informative of a certain type of target. Operation **810** is similar to operation **210.** In some examples, an additional criterion (which pertains to the position and/or velocity and/or acceleration of a target of the certain type) can be used to determine the first subset of data points, as explained with reference to operation **710** of **Fig. 7****.**

Operation **810** enables identifying the presence of a target (which corresponds to the first subset of data points).

The method of **Fig. 8** further includes obtaining (operation **820)** one or more additional data points (designated as a second set of one or more data points) informative of one or more targets detected by the at least one detection system **110** during a second period of time, wherein each given data point of the second set is informative of a target of the one or more targets, and is associated with data informative of at least one of a position or a velocity of the target. The data can further include the time of detection of each target. The second period of time is different from the first period of time, and ends after the end of the first period of time. In some examples, the second period of time begins after the end of the first period of time. For example, the second period of time can correspond to the period of time between time t₁ and time t₂.

In some examples, the method of **Fig. 8** can include storing the second set with the stored data (which already includes at least part of the first set of data points), thereby obtaining (updated) stored data. The updated stored data includes both the first set of data points and the second set of data points.

The method of **Fig. 8** further includes processing (operation **830)** an aggregated set of data points to identify a second subset of data points of the aggregated set of data points arranged in compliance with the given pattern informative of the certain type of target, wherein the aggregated set of points comprises both at least part of the first set of data points and at least part of the second set of data points. In other words, the aggregated set of data points includes at least part of the updated stored data.

The method of **Fig. 8** illustrates a repetition of the method of **Fig. 2** (or of **Fig. 7A****)** over time. The method first uses the first set of data points provided by the detection system **110** during the first period of time, in order to identify a first subset of data points arranged in compliance with a given pattern. Then, when additional data (a second set of data points) are provided by the detection system **110** during a second period of time, the method of **Fig. 2** (or of **Fig. 7****)** is applied both on the first set of data points (stored in the memory) and on the second set of data points (which can be also stored in the same memory as the first set of data points, or in a different memory than the first set of data points). This differs (among other differences) from trackers which use Kalman filters, in which the detection data are not stored over time (but are rather deleted after their processing), and, *a fortiori*, and are not integrated together with a plurality of past detection points (Kalman filters only store the last detection point). Note that this feature is not limitative and tracking of a target (by determining the presence of a given pattern) can be performed in various scenarios, without being applicable only to the case in which the various target detections are kept in memory over a certain period of time.

A non-limitative example of the method of **Fig. 8** is provided in **Figs. 9A** and **9B. Fig. 9A** corresponds to the first set **900** of data points collected during the first period of time between t₀ and t₁ (in this example, each data point corresponds to the position of the target in a X/Y plane). Assume that the given pattern corresponds to a straight line (as explained above, this is not limitative, and other adapted patterns can be used), which is informative of a certain type of target (e.g., a civil aircraft).

The method of **Fig. 8** determines two straight lines in the first set **900** of data points: a first straight line **910** and a second straight line **920.** In other words, at this stage, the method assumes that a first target of the certain type (corresponding to the first straight line **910)** of the certain type is present, and that a second target (corresponding to the second straight line **920)** of the certain type is present.

**Fig. 9B** corresponds to the aggregated set **930** of data points collected during both the first period of time from t₀ to t₁ and during the second period of time from t₁ to t₂.

The method of **Fig. 8** determines a third straight line **940.** This third straight line **940** coincides, at least partially, with the second straight line **920.** This confirms that the second target (identified based on the first set **900** of data points) is indeed a target of the certain type.

Regarding the first target (identified in the first period of time from t₀ to t₁ based on the first straight line **910),** in some examples, the method can conclude that the corresponding data points do not correspond to a target of the certain type, since no additional relevant data points have been identified based on the data received in the second period of time from time t₁ to time t₂. Note that the data points initially identified as being arranged in compliance with the first straight line **910** can be kept in the memory, in order to check whether they can comply with the given pattern in association with additional data points received in a subsequent period of time (e.g., from time t₂ to time t₃, or later on).

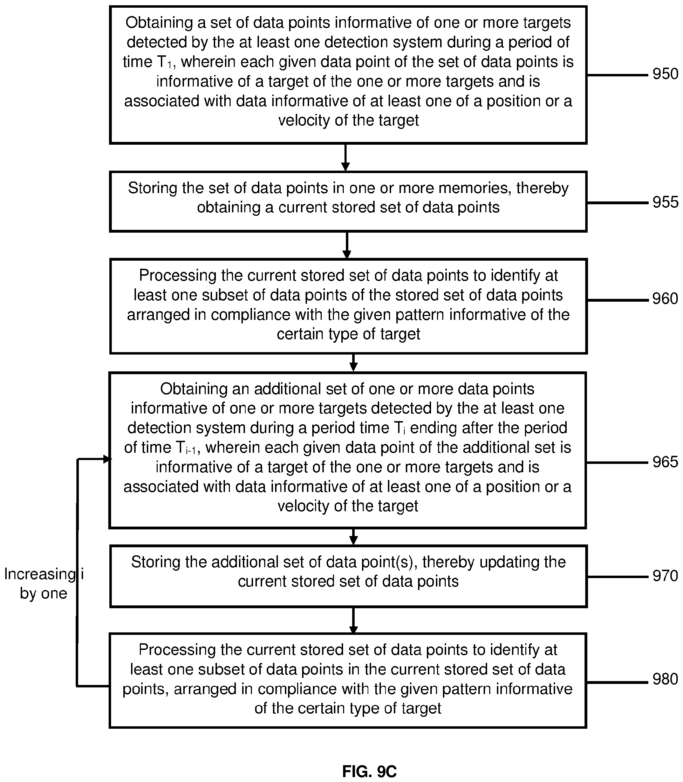

Note that the process described with respect to **Fig. 8** can be repeated over time more than once (e.g., N times), as illustrated in **Fig 9C****.**

The method of **Fig. 9C** includes obtaining (operation **950)** a set of data points informative of one or more targets detected by the at least one detection system **110** during a period of time T₁, wherein each given data point of the set of data points is informative of a target of the one or more targets and is associated with data informative of at least one of a position or a velocity of the target. The data can further include the time of detection of each target.

The method of **Fig. 9C** further includes storing (operation **955)** the set of data points in one or more memories (non-transitory memories), thereby obtaining a current stored set of data points.

The method of **Fig. 9C** further includes processing (operation **960)** the current stored set of data points to identify at least one subset of data points of the stored set of data points arranged in compliance with the given pattern informative of the certain type of target.

The method of **Fig. 9C** further includes, for i from 2 to N (wherein N is equal to or greater than 2):
- obtaining (operation **965)** an additional set of one or more data points informative of one or more targets detected by the at least one detection system **110** during a period time Tᵢ ending after the period of time Tᵢ₋₁, wherein each given data point of the additional set of data points is informative of a target of the one or more targets and is associated with data informative of at least one of a position or a velocity of the target (note that the data can include the time of detection of each target);
- storing (operation **970)** at least part of the additional set of data points in one or more memories, thereby updating the current stored set of data points. The current stored set of data points includes data points from each of the different set of data points, which can be stored either in the same memory, or in different memories which are accessible by at least one processing circuitry performing the method of **Fig. 9C****;**
- processing (operation **980)** the current stored set of data points to identify at least one subset of data points in the current stored set of data points, arranged in compliance with the given pattern informative of the certain type of target.

Since the detection data are not deleted, but stored over time to be analyzed with subsequent detection data, the method enables identifying the given pattern over a long time history. This can be used e.g., to declare the presence of a target, and/or to track a target. In particular, since additional detection data are collected over time and processed with previous stored detection data, it is possible to verify whether the assumptions of the algorithm **170** during a given period of time are confirmed over time. This improves the accuracy and the performance of the method. This is however not limitative, as explained above.

The methods of **Fig. 2** and/or of **Fig. 7A** and/or of **Fig. 8** and/or **Fig. 9C** enable accumulating and storing detection data of a detection system over longer periods of time than other trackers (this feature is always not limitative and these methods can be used in various scenarios, without being applicable only to the case in which the various target detections are kept in memory over a certain period of time). Note that in some examples, the various methods enable identifying targets in near real time.

In some examples, the data points, which are stored and analyzed in order to identify the given pattern, correspond to data points collected over a period of time which has a duration ΔT of ten seconds, or at least one minute, or at least two minutes. These values are not limitative.

Note that in the method of **Fig. 9C****,** the duration ΔT corresponds to the duration of the period of time including the various periods of time T₁ to T_{N}.

In some examples, this duration ΔT can be longer, such as five minutes, ten minutes, fifteen minutes, half an hour, one or more hours, or any duration between at least ten seconds and several hours (or even one or more days, or more). These values are not limitative.

Data points collected during the period of time of duration ΔT can be analyzed progressively, as explained with reference to **Fig. 8** or **Fig. 9C****.** Data collected from time t₀ to time t₁ are analyzed to attempt to identify the given pattern. Then, the process is repeated for data collected from time t₀ to time t₂, then for data collected from time t₀ to time t₃, etc., and eventually for data collected from time t₀ to time t_{N} (the duration between t₀ and t_{N} corresponds to ΔT).

Note that it is also possible to perform an offline process of the data points collected by the detection system **110.** Assume for example that data points have been collected by the detection system **110** from time t₀ to time t_{N}. In this case, it is possible to analyze the whole set of data points once, over the total period of time from t₀ to t_{N}, in order to identify a subset of data points arranged in compliance with the given pattern. This is, however, not limitative, and even when performing an offline analysis (in which all data is already available), it is possible to analyze progressively the data points collected during the total period of time, e.g., from time t₀ to time t₁, then from time t₀ to time t₂, ..., and, eventually, from time t₀ to time t_{N}.

Attention is now drawn to **Fig. 10****.**

As explained above, a given pattern can be identified in the set of data points provided by the detection system **110,** in order to identify a target of a certain type.

In some examples, the given pattern is informative of an expected velocity pattern of a target of a certain type. A non-limitative example of a given velocity pattern is provided in **Fig. 10****,** in which the radial velocity of the target is constant with respect to time (the pattern is therefore a horizontal line in the plane representing the radial velocity of each target with respect to time of detection of each target), wherein the radial velocity is in the interval between a first value V₁ and a first value V₂. This can help differentiate between certain targets which have a constant radial velocity (within a given range), and other targets which do not have a constant radial velocity.

As a consequence, the set of data points which is processed (see operations **210, 710, 810, 830, 960** and **980)** in order to identify the given pattern (in this example, a horizontal line), is selected to include, for each data point, the radial velocity and the time of detection of the target. One or more of the methods described above can be used to process the set of data points to identify a subset of data points of the set of data points arranged in compliance with this given pattern.

Note that it is possible to use different patterns in order to detect a target of a certain type. For example, it can be attempted to determine a first subset of data points corresponding to the position of the targets during a given period of time, which is arranged in compliance with a first pattern (such as a straight line) informative of a target of a certain type, and to determine a second subset of data points corresponding to the velocity of the targets over time during this given period of time, which is arranged in compliance with a second pattern (such as a horizontal line) informative of a target of the certain type. The data points which both belong to the first subset of data points and to the second subset of data points are identified as being indicative of a target of the certain type.

It has been mentioned with respect to **Fig. 1** that at least one algorithm **170** can be used to identify the given pattern. Examples of algorithms enabling identifying the given pattern will now be described.

In some examples, algorithm **170** includes an image processing algorithm. Non-limitative examples include the Hough transform algorithm, or other adapted computer vision algorithms.

In some examples, algorithm **170** includes an Artificial Intelligence algorithm, such as a machine learning model. In particular, the machine learning model can be trained to determine, in a set of data points, a required pattern. By way of non-limiting example, the layers of the machine learning model can be organized in accordance with Deep Neural Network (DNN) architecture, Convolutional Neural Network (CNN) architecture, Recurrent Neural Network architecture, Recursive Neural Networks architecture, Generative Adversarial Network (GAN) architecture, or otherwise. Optionally, at least some of the layers can be organized in a plurality of deep neural sub-networks. Each layer of the machine learning model can include multiple basic computational elements (CE), typically referred to in the art as dimensions, neurons, or nodes. Generally, computational elements of a given layer can be connected with CEs of a preceding layer and/or a subsequent layer. Each connection between a CE of a preceding layer and a CE of a subsequent layer is associated with a weighting value. A given CE can receive inputs from CEs of a previous layer via the respective connections, each given connection being associated with a weighting value which can be applied to the input of the given connection. The weighting values can determine the relative strength of the connections and thus the relative influence of the respective inputs on the output of the given CE. The given CE can be configured to compute an activation value (e.g., the weighted sum of the inputs) and further derive an output by applying an activation function to the computed activation. The activation function can be, for example, an identity function, a deterministic function (e.g., linear, sigmoid, threshold, or the like), a stochastic function, or other suitable function. The output from the given CE can be transmitted to CEs of a subsequent layer via the respective connections. Likewise, as above, each connection at the output of a CE can be associated with a weighting value which can be applied to the output of the CE prior to being received as an input of a CE of a subsequent layer. Further to the weighting values, there can be threshold values (including limiting functions) associated with the connections and CEs.

Note that it can occur that different subsets of data points comply with the given pattern. In some examples, the algorithm **170** can select the subset of data points which is the most likely to correspond to the given pattern (for example, because it contains the largest number of data points complying with the given pattern, or, more generally, which has the best match with the given pattern), or can select multiple subsets of data points (e.g. for which the level of match with the given pattern is above a threshold). This is not limitative.

In some examples, identification of the subset of data points can include a constraint which dictates that the subset of data points identified as matching the given pattern meet an order with respect to time. For example, assume that a straight line has to be identified. When moving from a first data point (acquired at time T₁) of the straight line to a consecutive second data point (acquired at time T₂) of the straight line, and then to another consecutive third data point (acquired at time T₃) of the straight line, the constraint can dictate that T₁<T₂<T₃, since it is not common that the given target travels backwards. Note that this is not limitative. In some examples, the constraint can dictate that the data points are associated with a similar RCS, and/or a similar velocity, and/or meet other physical constraint(s).

In some examples, identification of the subset of data points can include a constraint on the radial velocity. For example, the constraint can dictate that the maximal variation of the radial velocity between the different data points of the subset is below a given threshold.

In some examples, identification of the subset of data points can include a constraint on the time difference between consecutive data points, or consecutive groups of data points.

In some examples, other relevant kinematic constraints can be included in order to identify the subset of data points (in addition to identification of the given pattern).

**Fig. 11** illustrates a non-limitative example of a method of training a machine learning model to identify a given pattern.

The method of **Fig. 11** includes (operation **1100)** obtaining a training set including a plurality of sets of data points. In some examples, the plurality of sets of data points can be obtained using simulations of targets, and/or using actual data collected by one or more detection systems (e.g., one or more radar systems).

In the training set, each given set of data points is associated with a label. The label indicates which data points of the set are arranged according to a given pattern informative of a certain type of target. For example, if the given pattern is a straight line, the label indicates which data points of the given set can be considered as substantially located on a straight line. If the required pattern is a circle, the label indicates which data points of the set can be considered as substantially located on a circle. Note that the given pattern is not necessarily a two-dimensional pattern, and can be a three-dimensional pattern. For example, the given pattern can correspond to a required path in a three-dimensional referential (X, Y and Z).

In some examples, this label can be provided by an operator (supervised learning). In some examples in which the training set has been obtained using simulation data, it is known in advance which data points correspond to a target of the certain type. Therefore, it is known which data points are arranged in compliance with the given pattern. It is possible to label these data points as being arranged in compliance with the given pattern.

Note that it can occur that a given set of data points is informative of two or more targets of the certain type. In this case, it is possible to provide, for a given set of data points, a label indicative of two or more subsets of data points, each arranged in compliance with the given pattern.

In some examples, the machine learning model can be trained to identify a single given pattern.

In some examples, the machine learning model can be trained to identify different given patterns. For example, the machine learning model is trained to identify a first pattern corresponding to a straight line, and a second pattern corresponding to a circle. In this case, the machine learning model is fed with a training set including sets of data points informative of different given patterns. At least some of the sets of data points include data points informative of the first pattern, and at least some of the sets of data points are informative of the second pattern. Some of the sets of data points may be informative of both the first pattern and the second pattern.

The method of **Fig. 11** further includes feeding (operation **1110)** the training set to the machine learning model, for its training.

The weighting and/or threshold values of the machine learning model can be initially selected prior to training, and can be further iteratively adjusted or modified during training to achieve an optimal set of weighting and/or threshold values in a trained machine learning model. After each iteration, a difference (also called a loss function) can be determined between the actual output produced by the machine learning model (pattern identified in each set of data points) and the label (required pattern). The difference can be referred to as an error value. Training can be determined to be complete when a cost or loss function indicative of the error value is less than a predetermined value, or when a limited change in performance between iterations is achieved.

Once the machine learning model has been trained, it is operative to determine, within a set of data points, one or more subsets of data points, each arranged in compliance with the given pattern informative of the certain type of target.

If the machine learning model has been trained to identify different patterns informative of different types of targets, it is operative to determine, within a set of data points, one or more subsets of data points, wherein each given subset of data points is arranged in compliance with a pattern out of the different types of patterns.

The various methods described above enable determining at least one subset of data points arranged in compliance with a given pattern informative of a certain type of target. Once the subset of data points has been identified, this subset of data points can be used for various applications, as explained hereinafter.

**Fig. 12** describes a non-limitative example in which the subset of data points is used to track target(s).

Assume that at least one subset of data points has been identified (operation **1200)** in a set of data points provided by the detection system **110,** which is arranged in compliance with a given pattern informative of a certain type of target. The various methods described above can be used to determine the subset of data points.

The method can include using (operation **1210)** the subset of data points to track at least one target. Indeed, it is expected that the subset of data points corresponds to various detections of a same given target (of the certain type) by the at least one detection system **110** over time. In other words, this enables tracking the given target over time. In the example of **Fig. 6****,** the subset of data points arranged in compliance with the first straight line **600** enables tracking a first given target of the certain type over time, and the subset of data points arranged in compliance with the second straight line **620** enables tracking a second given target of the certain type over time.

Once a track of the target has been established, it can be used for various purposes, such as predicting the future path of the target, performing an action with respect to the target. For example, this can include controlling an acquisition device, such as a radar system to track the target, or a camera to track the target in order to acquire images of the target over time. This example is not limitative.

In some examples, the subset of data points can be used to determine position and/or velocity and/or acceleration (kinematic data) of a given target over time. Indeed, since it is now known that the subset of data points corresponds to a same given target detected at different instants of time, it is possible to obtain, for each detection, the position and/or the velocity (e.g., radial velocity) of the given target provided by the detection system **110** for this detection. Note that it is also possible to derive data from the subset of data points, such as the estimated velocity (which can be calculated based on the distance between consecutive data points of the subset, and the time interval between two consecutive data points of the subset), or the estimated acceleration (as a derivative of the estimated velocity).

Note that the method of **Fig. 12** enables tracking more than one target. Assume that a plurality of subsets of data points has been determined, wherein each given subset of data points is arranged in compliance with a given pattern informative of a certain type of target. Each given subset of data points enables tracking a different target. Note that the different targets can be of the same type (if the given patterns are the same for the different subsets of data points), or can be of a different type (if the given patterns are different for the different subsets of data points).

Attention is now drawn to **Fig. 13****.**

Assume that a first track (including a plurality of data points corresponding to target detections) has been generated and stored in a computer memory (operation **1300).** Assume that a second track (including a plurality of data points corresponding to target detections) has been generated and stored in a computer memory (operation **1310).** The first track and/or the second track may have been generated using the various methods described herein, or using other methods.

Then, the method can include processing (operation **1320)** the first track and the second track to determine whether they are arranged in compliance with a given pattern informative of a certain type of target. If a compliance is detected, the method can include fusing the first track and the second track into a unified track. Note that this method can be used to fuse more than two tracks.

Attention is now drawn to **Fig. 14****.**

In some examples, it is unknown whether the targets detected by the detection system **110** correspond to targets of a certain type (these targets are the ones which are "searched" by the operator of the detection system **110),** or to different types of detection, such as noise (radio interferences, clutter, etc.) or any other targets which do not correspond to the target searched by the operator of the detection system **110.**

The various methods described above can be used to identify, among the data points provided by the detection system **110,** which data points correspond to a target of the certain type, and which data points do not correspond to a target of the certain type.

When the detection threshold of the detection system **110** is high, the probability of getting a false detection is low. However, the sensitivity of the detection system **110** is low, which means that there is a high likelihood of missing targets.

Therefore, in some cases, it can be decided to reduce the detection threshold of the detection system **110** (such as of a radar system). The drawback is that several data points detected by the detection system **110** will correspond to noise. An example is provided in **Fig. 15****,** in which the detection threshold of the detection system **110** has been reduced, thereby providing numerous data points.

In some examples, the detection threshold of the detection system **110** corresponds to an energy detection threshold, which is the minimal energy returned by the target for which the detection system **110** will conclude that there is a target (and not noise).

If the energy detection threshold is reduced, the detection system **110** is operative to detect additional targets (including smaller targets and/or targets which are located at a distance). However, this can also trigger detections which do not correspond to a target, but rather to noise.

In some examples, the detection system **110** is operative to measure the velocity of the target. For example, a radar system is able to measure the radial velocity of a target (using the Doppler effect - see https://en.wikipedia.org/wiki/Doppler_radar). In particular, the detection system **110** can be associated with a velocity detection threshold, which corresponds to the minimal velocity for which the detection system **110** is operative to detect a target. Below this minimal velocity, the detection system **110** is unable to detect the target.

If the velocity detection threshold is reduced, the detection system **110** can detect additional targets, including slow targets. However, this can also trigger detections which do not correspond to a target, but rather to noise.

Note that the reduction of the velocity detection threshold of a radar can be performed using known methods: in a pulse radar, there is generally a receiving channel, and a transmitting channel (different from the receiving channel). The velocity detection threshold can be modified based on the time on target (TOT), which corresponds to the PRI multiplied by the number of transmitted pulses.

The method of **Fig. 14**can be used in a context in which the energy detection threshold and/or the velocity detection threshold of the detection system **110** has been reduced. As a consequence, it is possible to benefit both from the high sensitivity of the detection system **110,** while reducing the associated noise.

The method of **Fig. 14** includes obtaining (operation **1400)** a set of data points informative of one or more targets detected by the at least one detection system **110,** wherein each given data point of the set of data points is informative of a target of said one or more targets and is associated with data informative of at least one of a position or a velocity of the target.

As mentioned above, operation **1400** can be applied even in a context in which the energy detection threshold and/or the velocity detection threshold of the detection system **110** are low. As a consequence, a certain number of targets detected by the detection system **110** correspond to noise.

The method of **Fig. 14** further includes processing (operation **1410)** the set of data points to identify a subset of data points of the set of data points, arranged in compliance with a given pattern informative of a certain type of target.

The method of **Fig. 14** further includes (operation **1420)** differentiating between data points corresponding to a target of the certain type, and data points which do not correspond to a target of the certain type, based on the subset of data points. In particular, operation **1420** can include determining that the subset of data points corresponds to a target of the certain type. In some examples, operation **1420** can include determining that at least some or all of the data points of the set which do not belong to the subset of data points do not correspond to a target of the certain type (or determining that there is at least a risk that these data points, which do not belong to the subset of data points, do not correspond to a target of the certain type).

A non-limitative example is illustrated in **Fig. 15****,** in which a set **1500** of data points has been obtained. Assume that the given pattern is a straight line. The subset **1510** of data points of the set **1500** of data points is identified as being compliant with a straight line. Therefore, any data point of the subset **1510** of data points is identified as corresponding to a target of the certain type, whereas the other data points **1520** (which do not belong to the subset **1510)** are identified as corresponding to targets which are not of the certain type, or to noise.

Attention is now drawn to **Fig. 16****.**

In this method, at least one (or more) detection system(s) **110** is/are used, wherein two different detection thresholds are used: a first detection threshold and a second detection threshold, lower than the first detection threshold. In some examples, this can be implemented by using a single detection system **110** associated with a first processing circuitry and a second processing circuitry (or by a single processing circuitry operating in two modes), wherein the first processing circuitry compares, for each data point, the received energy with the first detection threshold, and the second processing circuitry compares, for each data point, the received energy with the second detection threshold. In other examples, this can be implemented by using at least two (or more) detection systems **110:** a first detection system is associated with the first detection threshold, and a second detection system is associated with the second detection threshold.

As mentioned above, when the comparison with the detection threshold indicates that the returned energy is equal to or exceeds the detection threshold, the data point is classified as a target, and, if not, it is classified as an absence of target (miss).

The method of **Fig. 16** includes obtaining (operation **1670)** a first set of data points informative of one or more targets detected by at least one detection system **110,** wherein each given data point of the first set of data points is informative of a target of said one or more targets and is associated with data informative of at least one of a position or a velocity of the target. The first set of data points has been generated using the first detection threshold.

The method of **Fig. 16** includes obtaining (operation **1680)** obtaining a second set of data points informative of one or more targets detected by at least one detection system **110,** wherein each given data point of the second set of data points is informative of a target of said one or more targets and is associated with data informative of at least one of a position or a velocity of the target. The second set of data points has been generated using the second detection threshold (in other words, even for a low returned energy, a target is detected), lower than the first detection threshold. This enables detecting slow targets and/or targets with small dimensions. Since a lower detection threshold is used, it can be expected that the second set of data points includes noise.

The first set of data points can be processed (operation **1685)** to detect the presence of a target and/or to track a target. In some examples, the first set of data points can be processed using methods, such as Kalman filter(s). Alternatively (or in addition), the first set of data points can be processed to identify at least a subset of data points of the first set of data points arranged in compliance with the given pattern informative of a certain type of target, as explained in the various methods described herein.

The second set of data points can be processed (operation **1690)** using the various methods described herein. In particular, as already explained, the second set of data points to identify at least one second subset of data points of the set of data points arranged in compliance with the given pattern informative of a certain type of target. Even if the second set of data points includes noise, the detection of the given pattern enables efficient detection and/or tracking of targets.

In other words, two types of processing are performed in parallel (or in alternance). The first set of data points, obtained using a regular detection threshold, can be dedicated to regular targets (e.g., with a dimension above a given threshold, and/or with a velocity above a given threshold), whereas the second set of data points, obtained using a lower threshold can be used to detect additional targets (e.g., with a dimension below a given threshold, and/or with a velocity below a given threshold, and/or with a smaller Radar cross-section).

Attention is now drawn to **Fig. 17****,** which describes a method enabling classifying targets based on detection data provided by the at least one detection system **110.**

Assume that a database stores a plurality of different given patterns. In particular, the database stores at least a first given pattern informative of a first type of target, and a second given pattern informative of a second type of target. The first type of target can be a geometrical pattern informative of an expected pattern of kinematic data (such as the trajectory, or velocity, or acceleration) of the first type of target. The second type of target can be a geometrical pattern informative of an expected pattern of kinematic data (such as the trajectory, or velocity, or acceleration) of the second type of target.

The second type of target is different from the first type of target, and the second given pattern is different from the first given pattern.

Note that this can be generalized to N patterns P₁ to P_{N} stored in the database: each pattern Pᵢ is informative of a given type TGᵢ of target, wherein each pattern Pᵢ is different from the other patterns Pⱼ (with j different from i), and each type TGᵢ of target is different from the other types TGⱼ of target (with j different from i).

The method of **Fig. 17** includes obtaining (operation **1700)** a set of data points informative of one or more targets detected by the at least one detection system **110,** wherein each given data point of the set of data points is informative of a target of said one or more targets, and is associated with data informative of at least one of a position or a velocity of the target. The data can further include the time of detection of each target.

The method of **Fig. 17** further includes obtaining (operation **1710)** a first given pattern informative of a first type of target.

The method of **Fig. 17** further includes obtaining (operation **1720)** a second given pattern informative of a second type of target (different from the first type).

The method of **Fig. 17** further includes processing (operation **1730)** the set of data points to perform identification of a subset of data points of the set of data points, arranged in compliance with the first given pattern or with the second pattern. In other words, it is attempted to identify the first given pattern and/or the second given pattern in the set of data points.

In some examples, operation **1730** can include feeding the set of data points to a first algorithm, operative to detect the first given pattern, and feeding the set of data points to a second algorithm (different from the first algorithm), operative to detect the second given pattern.

In other examples, the same algorithm is operative to detect both the first given pattern and the second given pattern.

Depending on the output of the identification performed at operation **1740,** the method of **Fig. 17** includes determining (operation **1740)** whether a target of the one or more targets, detected by the at least one detection system **110,** belongs to the first type of target, or to the second type of target.

For example, if only the first given pattern has been identified, this indicates that the detection system **110** has detected at least one target of the first type.

If only the second given pattern has been identified, this indicates that the detection system **110** has detected at least one target of the second type.

If both the first given pattern and the second given pattern have been identified, this indicates that the detection system **110** has detected at least one target of the first type, and at least one target of the second type.

In other words, the method of **Fig. 17** enables classifying the type of target(s) detected by the detection system **110,** among a predefined number of different possible types of targets, based on predefined patterns stored in a database.

A non-limitative example of the method of **Fig. 17** is provided in **Fig. 18****.** Assume that the first given pattern corresponds to a straight line, and that the second given pattern corresponds to a curved line with a certain curvature. Note that the certain curvature can be defined to be within a given predefined interval between Curvₘᵢₙ (minimal curvature) and Curvₘₐₓ (maximal curvature). In this case, the second given pattern embraces a plurality of possible patterns, wherein each of these patterns has a curvature in the interval [Curvₘᵢₙ;Curvₘₐₓ].

Assume that a set **1800** of data points has been obtained from the detection system **110.** This set **1800** of data points corresponds to the position (X position and Y position) of each target at each time of detection. The method of **Fig. 17** enables identifying a subset **1810** of data points of the set of data points **1800,** which is arranged in compliance with the second pattern **1820.** This indicates that the detection system **110** has detected a target of the second type. This enables also determining the position of this target over time (tracking), and determining velocity and/or acceleration of this target.

Attention is now drawn to **Fig. 19****.**

Assume that a subset of data points, arranged according to a given pattern informative of a certain type of target, has been identified, using the various methods described above (operation **1900).**

The subset of data points can be used to control operation of the at least one detection system **110.** In particular, the subset of data points can be used to generate a command to control or modify the orientation of the detection system **110** (operation **1910).** In some examples, the command is operative to make the line of sight of the detection system **110** follow the trajectory of the detected target. In some examples, assume that a target with a trajectory associated with a straight line has been detected. A command can be sent to the detection system **110** to focus its coverage on the relevant area(s) corresponding to the expected trajectory of the target, and to reduce its coverage of other areas. This enables maximizing the throughput of the detection system **110.**

As explained in at least some of the examples described above, in contradiction with standard trackers, it is possible to store the detection data provided by the detection system over time. This can be useful to adapt the operation of the detection system **110** to an area in which it is located. Indeed, the detection system **110** remains in a given area for a long period of time (in some cases, several months, or several years). It is therefore beneficial to learn about the typical behavior of targets within this area, and to adapt operation of the detection system **110** accordingly.

**Fig. 20** illustrates a method which can be used to adapt operation of the detection system **110** to the area in which it is located.

Assume that a plurality of sets of data points has been obtained, wherein each set of data points is informative of one or more targets detected by at least one detection system. This plurality of sets of data points can correspond to different detections performed by the at least one detection system **110** at different periods of time. This plurality of sets of data points can be stored in one or more memories (non-transitory memories).

The method of **Fig. 20** includes (operation **2000)** identifying, in each given set of data points of the plurality of sets of data points, at least one subset of data points of the given set of data points arranged in compliance with a given pattern informative of a certain type of target. As a consequence, a plurality of subsets of data points can be obtained. Note that each subset of data points of the plurality of subsets of data points can be obtained using the various methods described above. The plurality of subsets of data points can be stored in one or more memories (non-transitory memories).

The method of **Fig. 20** further includes using (operation **2010)** at least part of the plurality of sets of data points, or at least part of the plurality of subsets of data points, to adapt operation of the at least one detection system **110** to an area in which it is located. For example, assume that the plurality of subsets of data points indicate that targets of the certain type are generally present only in a specific zone of the area in which the detection system **110** is located. This can be used to control operation of the detection system **110,** in order to make the detection system **110** focus its field of view, or its line of sight, or its maximal energy axis, specifically on the specific zone. This example is not limitative.

Attention is drawn to **Fig. 21****.**

Assume that at least one subset of data points (arranged in compliance with the given pattern) has been identified in the set of data points provided by the detection system **110,** using the various methods described above. The set of data points corresponds to various detections performed by the detection system **110** at different instants of time of a given period of time, and classified by the detection system **110** as corresponding to targets.

When a detection system **110** such as a radar system attempts to detect targets, it transmits electromagnetic waves towards a given direction, and senses the returned electromagnetic waves. If the energy of the returned electromagnetic waves is equal to or above a detection threshold of the radar system, the radar system detects a target. If the energy of the returned electromagnetic waves is below the detection threshold of the radar system, the radar system does not detect a target (it classifies the data as a non-target/absence of target detection). A similar principle applies to other types of detection systems (such as LIDAR system, etc.).

The method of **Fig. 21** includes obtaining (operation **2110)** a second set of data points which correspond to data points collected by the at least one detection system **110** and classified by the detection system **110** as not corresponding to a target. The second data points can correspond to data points collected by the detection system **100** during the given period of time in which the set of data points has been collected, but this is not mandatory. As mentioned above, this classification can result from the fact that the returned energy is below the detection threshold of the radar system, for the data points of this second set. This can be also due to the low velocity of the target, to clutter, to the small RCS of the target, or to other factor(s). In other words, the second set of data points can include in particular missed detections of the target(s).

The method of **Fig. 21** further includes determining (operation **2120)** one or more second data points of the second set of data points, which are arranged, together with the subset of data points, in compliance with the same given pattern associated with the subset of data points. In other words, the subset of data points and the one or more second data points are all located on the same given pattern.

Operation **2120** can include e.g., selecting the data points of the second set of data points, which are located at a distance from the given pattern which is below a threshold, as the second data points.

Since the second data points (originally classified by the detection system **110** as not corresponding to a target) are present on the same given pattern as the subset of data points, it can be determined that these second data points correspond in fact to a target of the certain type, which has been missed by the detection system **110.**

Therefore, in some examples, responsive to the determination of the one or more second data points, the method can include determining that the one or more second data points correspond to a target of the certain type. In some examples, responsive to the determination of the one or more second data points, the method can include determining that the one or more second data points and the subset of data points correspond to the same target, detected at different instants of time.

In some examples, responsive to the determination of the one or more second data points, the method can include instructing the detection system **110** to classify the one or more second data points as targets. This can include instructing the detection system **110** to modify its detection threshold for at least the one or more second data points. This modification of the detection threshold is performed *a posteriori* and enables the detection system **110** to re-classify the second data points as corresponding to detection of a target. This can include updating, in at least one memory of the detection system **110,** one or more detection thresholds used by the detection system **110** to classify the second data points, in order to update classification of the second data points, thereby classifying them as a target, and not as an absence of a target.

Attention is now drawn to **Figs. 22** and **23****.**

A part of a detection system (such as the receiver of as a radar system) can provide, for each pair of values of azimuth and elevation, measurement data (map) **2220** including range data **2210** (estimate of the range), and Doppler data **2230** (from which radial velocity can be determined), and a corresponding returned measured energy, for different candidate targets **2240.** This map can be obtained (operation **2310).**

A machine learning model can be trained to declare which data points (candidate targets) of the map correspond to actual targets. The machine learning model receives the map (for example as an image - this is however not limitative) and outputs a probability that each candidate target corresponds to an actual target (operation **2320).** The data points declared as actual targets can then be used in the various methods described herein to identify that a plurality of them correspond to a same single target, and/or to track targets (see the black stars in **Figs. 7B** and **7C****).**

The machine learning model can include e.g., a deep neural network, a convolutional neural network, a recurrent neural network, or other adapted types of machine learning model.

Training of the machine learning model can include using a training set including a plurality of maps (including range data, Doppler data and measured returned energy for different candidate targets). Each map is labelled with a label indicating which candidate target corresponds to an actual target. This can be known using other sensors, such as a GPS mounted on the actual targets, an optical detection system, etc.

In the following detailed description, numerous specific details are set forth in order to provide a thorough understanding of the invention. However, it will be understood by those skilled in the art that the presently disclosed subject matter may be practiced without these specific details. In other instances, well-known methods have not been described in detail so as not to obscure the presently disclosed subject matter.

The terms "computer" or "computerized device" should be expansively construed to include any kind of hardware-based electronic device with a data processing circuitry (e.g., digital signal processor (DSP), a GPU, a TPU, a field programmable gate array (FPGA), an application specific integrated circuit (ASIC), microcontroller, microprocessor etc.). The data processing circuitry (designated hereinafter as processing circuitry) can comprise, for example, one or more processors operatively connected to at least one (or more) computer memory, loaded with executable instructions for executing operations, as further described below. The processing circuitry encompasses a single processor or multiple processors, which may be located in the same geographical zone, or may, at least partially, be located in different zones, and may be able to communicate together. The multiple processors can be identical (same type), or can be different. The one or more memories can be identical (same type), or can be different.

Unless specifically stated otherwise, as apparent from the following discussions, it is appreciated that throughout the specification discussions utilizing terms such as "obtaining", "identifying", "determining", "detecting", "storing", "identifying", "selecting", "classifying" or the like, refer to the action(s) and/or process(es) of a computer that manipulates and/or transforms data into other data, said data represented as physical, such as electronic, quantities and/or said data representing the physical objects.

Operations in accordance with at least part of the teachings herein may be performed by a computer or computerized device specially constructed for the desired purposes, or by a general-purpose computer or computerized device specially configured for the desired purpose by a computer program stored in a computer readable storage medium.

In embodiments of the presently disclosed subject matter, fewer, more, and/or different stages than those shown in the methods of **Figs. 2****,** **7A****,** **8****,** **9C****,** **11****,** **12****,** **13****,** **14****,** **15****,** **16****,** **17****,** **19****,** **20****,** **21** and **23** may be executed. In embodiments of the presently disclosed subject matter, one or more stages illustrated in the methods of **Figs. 2****,** **7A****,** **8****,** **9C****,** **11****,** **12****,** **13****,** **14****,** **15****,** **16****,** **17****,** **19****,** **20****,** **21** and **23** may be executed in a different order, and/or one or more groups of stages may be executed simultaneously.

Embodiments of the presently disclosed subject matter are not described with reference to any particular programming language. It will be appreciated that a variety of programming languages may be used to implement the teachings of the presently disclosed subject matter as described herein.

The invention contemplates a computer program being readable by a computer for executing one or more methods of the invention. The invention further contemplates a machine-readable memory tangibly embodying a program of instructions executable by the machine for executing one or more methods of the invention.

It is to be noted that the various features described in the various embodiments may be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system comprising one or more processing circuitries configured to:
obtain at least one set of data points informative of one or more targets detected by at least one detection system, wherein each given data point of the at least one set of data points is informative of a target of said one or more targets and is associated with data informative of at least one of a position or a velocity of the target, and
process the at least one set of data points to identify at least one subset of data points of the set of data points, arranged in compliance with a given pattern informative of a certain type of target.

2. The system of claim 1, configured to, responsive to identifying the at least one subset of data points, perform at least one of (i), (ii) or (iii):
(i) determining that the at least one subset of data points corresponds to a same target, or to a same target of the certain type;
(ii) operating the detection system in a tracking mode;
(iii) using the at least one subset of data points to track a target.

3. The system of claim 1 or of claim 2, wherein at least one of (i) or (ii) is met:
(i) the set of data points corresponds to a plurality of target detections performed by the detection system during a given period of time, wherein a plurality of target detection attempts has been performed by the detection system in this given period of time and corresponds to an absence of detection of a target by the detection system;
(ii) the set of data points corresponds to one or more targets detected during a first period of time, wherein the system is configured to obtain and store one or more new data points informative of one or more targets detected by the detection system during a second period of time after the first period of time, wherein one or more target detection attempts has been performed by the detection system in this second period of time and corresponds to an absence of detection of a target by the detection system.

4. The system of any one of claims 1 to 3, configured to:
obtain and store at least one first set of data points informative of one or more targets detected by the at least one detection system during a first period of time, wherein each given data point of the at least one first set of data points is informative of a target of the one or more targets and is associated with data informative of at least one of a position or a velocity of the target,
process the at least one first set of data points to identify at least one first subset of data points of the at least one first set of data points arranged in compliance with the given pattern informative of the certain type of target,
obtain at least one second set of one or more data points informative of one or more targets detected by the at least one detection system during a second period time, wherein each given data point of the at least one second set is informative of a target of the one or more targets and is associated with data informative of at least one of a position or a velocity of the target, and
process an aggregated set of data points to identify at least one second subset of data points of the aggregated set of data points arranged in compliance with the given pattern informative of the certain type of target, wherein the aggregated set of points comprises the stored first set of data points and the second set of data points.

5. The system of any one of claims 1 to 4, configured to:
obtain a first set of data points informative of one or more targets detected by the at least one detection system, wherein each given data point of the first set of data points is informative of a target of said one or more targets and is associated with data informative of at least one of a position or a velocity of the target, wherein the first set of data points has been generated using a first detection threshold,
use the first set of data points to detect or track a first set of one or more targets,
obtain a second set of data points informative of one or more targets detected by the at least one detection system, wherein each given data point of the second set of data points is informative of a target of said one or more targets and is associated with data informative of at least one of a position or a velocity of the target, wherein the second set of data points has been generated using a second detection threshold associated with the detection system which is smaller than the first detection threshold,
process the second set of data points to identify a second subset of data points of the at least one second set of data points, arranged in compliance with a given pattern informative of a certain type of target, and
use the second subset of data points to detect or track a second set of one or more targets.

6. The system of any one of claims 1 to 5, wherein at least one of (i), (ii), (iii) or (iv) is met:
(i) the given pattern is informative of an expected trajectory of said certain type of target, or of an expected velocity profile of said certain type of target;
(ii) the given pattern corresponds to a geometrical pattern, a straight line or a curved line;
(iii) the at least one subset of data points is selected to include data points associated with a height complying with the certain type of target, or with a velocity or an acceleration complying with the certain type of target;
(iv) the system is configured to process the at least one set of data points with an Artificial Intelligence algorithm trained to detect the given pattern.

7. The system of any one of claims 1 to 6, configured to perform at least one of (i) or (ii):
(i) process the at least one set of data points to identify a plurality of subsets of data points of the at least one set of data points, wherein each given subset of data points of the plurality of subsets of data points is arranged in compliance with a given pattern informative of a certain type of target;
(ii) process the at least one set of data points to perform an identification of at least one first subset of data points of the at least one set of data points, arranged in compliance with a first given pattern informative of a first type of target, and
process the at least one set of data points to perform an identification of at least one second subset of data points of the at least one set of data points, arranged in compliance with a second given pattern informative of a second type of target different from the first type of target, wherein the second given pattern is different from the first given pattern.

8. The system of any one of claims 1 to 7, configured to:
obtain a first track of a target determined based on first data provided by the detection system,
obtain a second track of a target determined based on second data provided by the detection system, and
determine whether the first track and the second track are arranged in compliance with a given pattern informative of a certain type of target.

9. The system of any one of claims 1 to 8, configured to:
obtain at least one set of data points informative of one or more targets detected by the at least one detection system during a period of time T₁, wherein each given data point of the at least one set of data points is informative of a target of the one or more targets and is associated with data informative of at least one of a position or a velocity of the target,
store the at least one set of data points in one or more memories, thereby obtaining a current stored set of data points,
process the current stored set of data points to identify at least one subset of data points of the current stored set of data points arranged in compliance with the given pattern informative of the certain type of target,
for i from 1 to N, perform (1) to (3), wherein N is equal to or greater than 2:
(1) obtaining at least one set of data points informative of one or more targets detected by the at least one detection system during a period time Tᵢ ending after the period of time Tᵢ₋₁, wherein each given data point of the at least one set of data points is informative of a target of the one or more targets and is associated with data informative of at least one of a position or a velocity of the target,
(2) storing at least part of the set of data points SDPᵢ in one or more memories, thereby updating the current stored set of data points,
(3) processing the current stored set of data points to identify a subset of data points in the current stored set of data points arranged in compliance with the given pattern informative of the certain type of target.

10. The system of any one of claims 1 to 9, configured to:
obtain a first given pattern informative of a first type of target,
obtain a second given pattern informative of a second type of target,
process the at least one set of data points to perform an identification of at least one subset of data points of the at least one set of data points, arranged in compliance with the first given pattern or with the second given pattern,
depending on an output of the identification, determine whether a target of the one or more targets detected by the at least one detection system belongs to the first type of target or to the second type of target.

11. The system of any one of claims 1 to 10, configured to:
obtain a second set of data points which correspond to data points declared as not corresponding to a target, and
determine one or more given second data points of the second set, such that the subset of data points and the one or more second data points are arranged together in compliance with the same given pattern associated with the subset of data points.

12. The system of any one of claims 1 to 11, configured to perform at least one of (i), (ii), (iii) or (iv):
(i) use at least part of the subset of data points to adapt a detection threshold of the detection system, generate a command for the at least one detection system, or adapt operation of the at least one detection system to an area in which it is located;
(ii) use the set of data points or the subset of data points, and wind measurements to detect or track a target;
(iii) determine whether one or more data points of the set of data points or of the subset of data points are associated with a position located above one or more predefined Earth features, and detecting or tracking a target based on said determining;
(iv) determine a direction of a trajectory associated with the subset of data points, and detecting or tracking a target based on said determining.

13. The system of any one of claims 1 to 12, wherein the system or the detection system is operative to:
obtain measurement data comprising range data and Doppler data of a plurality of candidate targets, and a corresponding measured energy,
feed the measurement data, or data informative thereof, to a trained machine learning model to determine a probability that each candidate target corresponds to an actual target.

14. A method comprising, by one or more processing circuitries:
obtaining at least one set of data points informative of one or more targets detected by at least one detection system, wherein each given data point of the at least one set of data points is informative of a target of said one or more targets and is associated with data informative of at least one of a position or a velocity of the target, and
processing the at least one set of data points to identify at least one subset of data points of the set of data points, arranged in compliance with a given pattern informative of a certain type of target.

15. A non-transitory computer readable medium comprising instructions that, when executed by one or more processing circuitries, cause the one or more processing circuitries to perform:
obtaining at least one set of data points informative of one or more targets detected by at least one detection system, wherein each given data point of the at least one set of data points is informative of a target of said one or more targets and is associated with data informative of at least one of a position or a velocity of the target, and
processing the at least one set of data points to identify at least one subset of data points of the set of data points, arranged in compliance with a given pattern informative of a certain type of target.
